# EUROPÄISCHE PATENTSCHRIFT

(11) **EP 2 857 333 B1**
(45) Veröffentlichungstag und Bekanntmachung des Hinweises auf die Patenterteilung: **01.02.2017**
(21) Anmeldenummer: 14187488.3
(22) Anmeldetag: 02.10.2014
(51) Int. Cl.: B65G 47/90, B65B 21/18

(54) **Verfahren und System zum Abführen von auf einer Horizontalfördereinrichtung kontinuierlich bewegten und in parallelen Reihen geführten Getränkebehältnissen**
Method and system for discharging beverage containers moving continuously in parallel rows on a horizontal conveyor
Procédé et système d'évacuation de récipients de boissons se déplaçant en continu sur un dispositif de transport horizontal et transportés en rangées parallèles

(30) Priorität: 07.10.2013 DE 102013111088
(43) Veröffentlichungstag der Anmeldung: 08.04.2015
(73) Patentinhaber: Krones Aktiengesellschaft, 93073 Neutraubling (DE)
(72) Erfinder: Lindauer, Matthias, 93073 Neutraubling (DE)
(74) Vertreter: Benninger, Johannes

(56) Entgegenhaltungen:
- EP-A1- 0 613 841
- EP-A1- 1 260 469
- EP-A1- 2 537 644
- WO-A1-2012/101589
- DE-A1- 1 922 739
- DE-A1- 2 711 702
- DE-B- 1 206 783

## Beschreibung

Die vorliegende Erfindung betrifft ein Verfahren sowie ein System zum Abführen von auf einer Horizontalfördereinrichtung kontinuierlich bewegten und in parallelen Reihen geführten Getränkebehältnissen.

Bei einer Vielzahl von vorstellbaren Stationen im Bereich der Getränketechnologie besteht die Notwendigkeit, Getränkebehältnisse von einer Horizontalfördereinrichtung abzuführen und hierauf folgend an nachgeordnete Stationen weiterzuführen bzw. zu übergeben. Insbesondere im Bereich der Packtechnik sind hierbei Einrichtungen aus dem Stand der Technik bekannt, bei welchen die jeweiligen Getränkebehältnisse von einer Horizontalfördereinrichtung entgegengenommen werden und hierauf in Verpackungseinheiten, wie Kartonagen, Getränkekästen oder dergleichen eingesetzt werden.

Die EP 0 613 841 A1 offenbart eine Vorrichtung, bei welcher Behälter über eine Zuführung aus einem Trichter entnommen und nachfolgend zu einem ersten Förderer transportiert werden. Die Behälter werden mittels Bürsten/Walzen und Rinnen bzw. Führungsnuten so ausgerichtet, dass sie in liegender Stellung kopf- oder bodenvoran in eine gemeinsame Längsrichtung gereiht auf den Förderer geleitet werden und sich dabei gegenseitig nicht überlappen. Ein Kamerasystem zeichnet die Art der Platzierung bzw. Positionierung der einzelnen Behälter auf und leitet die Angaben an eine mit einem Roboter verbundene Steuereinrichtung weiter. Über einen an dem Roboter angeordneten Bearbeitungskopf, welcher über ein oder mehrere Vakuumpolster verfügt, können die Behälter aufgrund der mittels des Kamerasystems festgestellten Platzierungsangaben aufgenommen werden. Der Roboterarm positioniert die Behälter anschließend mit Hilfe eines Korrekturmittels in gleicher aufrechter Stellung auf einem Abgabebeförderer.

DE 27 11 702 beschreibt eine gattungsgemäße Vorrichtung.

In der Regel sind die jeweiligen Getränkebehältnisse bzw. Flaschen vor Entgegennahme von der Horizontalfördereinrichtung bereits geordnet und stehen aneinander an. Hierzu können die Getränkebehältnisse über einen geeigneten Zulauf an die Horizontalfördereinrichtung weitergegeben werden und nach Eintritt in die Horizontalfördereinrichtung in mehreren parallel zueinander orientierten Gassen geführt sein. Werden die Getränkebehältnisse von der Horizontalfördereinrichtung entgegengenommen, so ist ihre jeweilige Position bekannt. Ggf. vorhandene Greifeinrichtungen können aus diesem Grunde an definierten Positionen über den Getränkebehältern abgesenkt werden, die Getränkebehältnisse entgegennehmen und hierauf in den entsprechenden Verpackungseinheiten absetzen.

Eine derartige Vorrichtung offenbart beispielsweise das DE-Patent Nr.: 42 04 993. Das DE-Patent zeigt eine Vorrichtung zum Zuführen von Gefäßen an eine kontinuierlich arbeitende Verpackungsmaschine. Die Vorrichtung umfasst mehrere Greifköpfe, die rotierend angetrieben an jeweils einem Hebel angelenkt sind. Weiter ist ein Förderband offenbart, welches Flaschen in Richtung der jeweiligen Greifköpfe führt. Die Flaschen sind hierbei in Reihen angeordnet, werden an einem Ende des Förderbandes durch einen Anschlag angehalten und von einem der Greifköpfe entgegengenommen. Nach Entgegennahme wird der Anschlag gesenkt. Weitere Flaschen rücken nach, wobei über den Greiferkopf die bereits entgegengenommen Flaschen in entsprechenden Kästen platziert und nachfolgend abtransportiert werden. Die weiteren Flaschen, welche in der Zwischenzeit nachgerückt sind, können über einen weiteren Greifkopf entgegengenommen und in einem weiteren nachfolgenden Kasten abgesetzt werden.

Bei derartigen aus dem Stand der Technik bekannten Vorrichtungen hat sich gezeigt, dass die erwartete Soll-Position bei Entgegennahme der jeweiligen Behälter vom Förderband nicht immer mit der tatsächlichen Ist-Position übereinstimmt. Insbesondere kann dies der Fall sein, wenn die jeweiligen Behälter beispielsweise durch PET-Flaschen ausgebildet sind, die zu Forminstabilität neigen. Auch können Ungenauigkeiten beim Überführen der jeweiligen Getränkebehältnisse auf die Horizontalfördereinrichtung auftreten, so dass die tatsächliche Ist-Position nur näherungsweise bekannt ist.

Sofern Abweichungen von der erwarteten Soll-Position auftreten, können die jeweiligen Greifeinrichtungen zur Entgegennahme der jeweiligen Behälter mit den Behältern kollidieren, wobei die Behälter von den Einrichtungen nicht aufgenommen werden. Hieraus können Beschädigungen an der jeweiligen Greifeinrichtung resultieren. Um diesen Fehler zu korrigieren, kann zudem eine Unterbrechung des Prozesses notwendig sein, was zu Verzögerungen in der Behälterherstellung und einem geringeren Durchsatz führt.

Aufgabe der Erfindung ist daher ein Verfahren und ein System zur Verfügung zu stellen, mittels welchen in parallelen Reihen geführte Getränkebehältnisse von einer Horizontalfördereinrichtung mit erhöhter Genauigkeit entgegengenommen und abgeführt werden können. Weiter soll das Verfahren auf einfache und unkomplizierte Art und Weise umgesetzt werden können und das System einen einfachen Aufbau besitzen.

Die obigen Aufgaben werden durch ein Verfahren und ein System gelöst, welche die Merkmale in dem Patenanspruch 1 bzw. in dem Patentanspruch 10 umfassen. Weitere vorteilhafte Ausgestaltungen werden durch die Unteransprüche beschrieben.

Das erfindungsgemäße Verfahren ist vorgesehen zum Abführen von auf einer Horizontalfördereinrichtung kontinuierlich bewegten und in parallelen Reihen geführten Getränkebehältnissen. Die Getränkebehältnisse können beispielsweise durch Flaschen, wie Glasflaschen, PET-Flaschen oder dergleichen ausgebildet sein. Insbesondere kann das erfindungsgemäße Verfahren für als PET-Flaschen ausgebildete Getränkebehältnisse verwendet werden, da diese gegenüber Glasflaschen eine geringere Formstabilität besitzen. Da die Getränkebehältnisse bei erfindungsgemäßen Verfahren zumindest näherungsweise geschlossen auf der Horizontalfördereinrichtung bewegt werden, können ein oder mehrere der Getränkebehältnisse druckbeaufschlagt aneinander anstehen, woraus ggf. eine Verformung eines oder mehrerer der Getränkebehältnisse resultiert. Mit der Verformung einhergehend kann die jeweilige Ist-Position der Getränkebehältnisse in Förderrichtung von einer erwarteten Soll-Position abweichen, so dass eine nachfolgend noch näher beschriebene Anpassung einer Bewegungsfahrt eines oder mehrerer Greifköpfe zur Entgegennahme der Getränkebehältnisse notwendig sein kann.

Für den angesprochenen Fachmann ist klar, dass das erfindungsgemäße Verfahren in diversen Ausführungsformen für weitere Getränkebehältnisse Verwendung finden kann, so dass das erfindungsgemäße Verfahren bzw. das erfindungsgemäße System nicht zum Abführen von als PET-Flaschen und/oder Glasflaschen ausgebildeten Getränkebehältnissen beschränkt sind.

Zudem können die Getränkebehältnisse bei Abführen von der Horizontalfördereinrichtung bereits befüllt sein. Denkbar ist jedoch auch, dass die jeweiligen Getränkebehältnisse unbefüllt mittels der Horizontalfördereinrichtung bewegt und nachfolgend im weiterhin unbefüllten Zustand abgeführt werden.

Beispielsweise kann vorgesehen sein, dass parallel zur Förderrichtung der jeweiligen Getränkebehältnisse ein oder mehrere Gassenbleche entlang der Horizontalfördereinrichtung angeordnet sind. Bei mehreren Gassenblechen können die jeweiligen Gassenbleche parallel zueinander orientiert sein und die jeweiligen Getränkebehältnisse in den parallelen Reihen führen. Die Getränkebehältnisse können somit auf der Horizontalfördereinrichtung im geordneten Massenstrom geführt sein.

Vorzugsweise erstrecken sich die Gassenbleche über die gesamte Längserstreckung der Horizontalfördereinrichtung. Darüber hinaus können zur Führung der Getränkebehältnisse in parallelen Reihen beidseitig der Horizontalfördereinrichtung Seitenwände angeordnet sein, die sich ggf. parallel zu dem oder den jeweiligen Gassenblechen erstrecken. Die Horizontalfördereinrichtung ist in bevorzugten Ausführungsformen als umlaufendes Endlosförderband ausgebildet.

Da eine Entgegennahme der Getränkebehältnisse durch einen oder mehrere Greifköpfe erfolgt, erstrecken sich die Gassenbleche bzw. die Seitenwände bevorzugterweise bei Ausbildung der Getränkebehältnisse als Flaschen in vertikaler Richtung nicht über einen Flaschenhals hinaus, so dass die jeweiligen Getränkebehältnisse für die ein oder mehreren Greifköpfe von oben zugänglich gehalten werden.

Beispielsweise kann es sein, dass die Getränkebehältnisse vor Weiterführung an die Horizontalfördereinrichtung in einem ungeordneten Massenstrom bewegt werden. Weiter kann der Horizontalfördereinrichtung eine Einrichtung vorgeordnet sein, welche die jeweiligen Getränkebehältnisse für die parallel geführten Reihen einteilt. Die Einrichtung kann beispielsweise ein oder mehrere verstellbare Weichen umfassen. Dem Fachmann ist bekannt, wie er derartige Einrichtungen ausgestalten kann, so dass im Rahmen vorliegender Patentanmeldung nicht näher auf Möglichkeiten zu Einteilung eingegangen werden braucht.

Die ein oder mehreren Greifköpfe können bei einer nachfolgend noch näher beschriebenen Bewegungsfahrt sowie bei Entgegennahme der jeweiligen Getränkebehältnisse von der Horizontalfördereinrichtung oberhalb der Getränkebehältnisse geführt sein.

Denkbar ist beispielsweise, dass zur Umsetzung des erfindungsgemäßen Verfahrens lediglich ein Greifkopf vorgesehen ist. In bevorzugten Ausführungsformen können jedoch mehr als ein Greifkopf, beispielsweise zwei oder drei Greifköpfe vorhanden sein, die in Förderrichtung der Getränkebehältnisse hintereinander angeordnet sind und sich vor und nach einem Anpassen ihrer Bewegungsfahrt ggf. geschwindigkeitssynchron bewegen. Die mehreren Greifköpfe können hierbei in Förderrichtung der Getränkebehältnisse während ihrer Bewegung miteinander fluchten. Die Entgegennahme von Getränkebehältnissen und/oder das Abführen können zeitgleich mit sämtlichen Greifköpfen erfolgen. Vorstellbar ist zudem auch, dass ein oder mehrere der Greifköpfe in Förderrichtung der Getränkebehältnisse nebeneinander angeordnet sind und sich gemeinsam parallel zur Förderrichtung der Getränkebehältnisse bewegen.

Auch kann es sein, dass sich oberhalb der Horizontalförderrichtung und wenigstens abschnittsweise entlang der Horizontalfördereinrichtung eine Linearführung erstreckt, mit welcher die ein oder mehreren Greifköpfe in Verbindung gebracht sind. Hierbei können sich die ein oder mehreren Greifköpfe zum Abführen und zur Entgegennahme von Getränkebehältnissen entlang der Linearführung bewegen. Ist weiterhin eine Verpackungsmaschine vorgesehen, an welcher die Getränkebehältnisse nach Abführung übergeben werden sollen, kann sich die Linearführung wenigstens abschnittsweise in den Bereich der Verpackungsmaschine erstrecken.

Beispielsweise kann eine Verpackungsmaschine vorhanden sein, welche mehrere Verpackungseinheiten über eine Horizontalfördereinrichtung führt. Die Verpackungseinheiten können beispielsweise als Kartonagen, Getränkekisten oder dergleichen ausgebildet sein, wobei die ein oder mehreren Greifköpfe die Getränkebehältnisse nach Entgegennahme in den jeweiligen Verpackungseinheiten absetzen. Auch die Horizontalfördereinrichtung der Verpackungsmaschine kann als Endlosförderband ausgebildet sein.

Erfindungsgemäß bilden die ein oder mehreren Greifköpfe jeweils mindestens eine Aufnahmeposition für die abzuführenden Getränkebehältnisse aus. Die Aufnahmepositionen können beispielsweise durch Greifeinrichtungen, wie Greiftulpen, ein oder mehrere Greiffinger oder dergleichen, ausgebildet werden. In einer Ausführungsform der vorliegenden Erfindung kann vorgesehen sein, dass mehrere Greifköpfe vorhanden sind, wobei die mehreren Greifköpfe jeweils genau eine Aufnahmeposition bzw. eine Greifeinrichtung für die jeweiligen Getränkebehältnisse ausbilden. In den jeweiligen Aufnahmepositionen können die jeweiligen Getränkebehältnisse nach Entgegennahme beispielsweise via Unterdruck, klemmend und/oder formschlüssig über die jeweiligen Greifeinrichtungen in den Aufnahmepositionen gehalten sein.

Vorgesehen ist zudem, dass die Getränkebehältnisse auf der Horizontalfördereinrichtung zumindest näherungsweise geschlossen geführt werden. Die Getränkebehältnisse werden auf der Horizontalfördereinrichtung demnach derart geführt, dass zwischen aufeinanderfolgenden Getränkebehältnissen kein oder im Wesentlichen kein Abstand ausgebildet ist. Die Getränkebehältnisse können somit bei ihrer Bewegung auf der Horizontalfördereinrichtung aneinander anstehen bzw. direkt aufeinanderfolgende Getränkebehältnisse der jeweiligen Reihe können miteinander in Oberflächenkontakt gebracht sein.

Erfindungsgemäß wird bei einem ersten Schritt im Rahmen des Verfahrens eine in Förderrichtung eingenommene Ist-Position eines oder mehrerer der kontinuierlich bewegten Getränkebehältnisse erfasst. Vorstellbar ist beispielsweise, dass bei einer eingenommenen Soll-Position Getränkebehältnisse einer ersten Reihe zu Getränkebehältnissen der weiteren Reihen während ihrer kontinuierlichen Förderbewegung durchgehend senkrecht zu ihrer Förderrichtung miteinander fluchten. Weiter kann die Möglichkeit bestehen, mittels eines Erfassens der Ist-Position ein Abweichen der fluchtenden Ausrichtung von Getränkebehältnissen einer ersten Reihe zu Getränkebehältnissen einer oder mehrerer weiterer der parallelen Reihen zu erkennen. Sofern ein Abweichen der fluchtenden Ausrichtung bei Erfassung der Ist-Position erkannt wird, kann eine Anpassung einer Bewegungsfahrt der ein oder mehreren Greifköpfe erfolgen. Beispielsweise eignen sich zur Erfassung der Ist-Position optische Erfassungssysteme wie Kameras oder dergleichen. In bevorzugten Ausführungsformen können, wie nachfolgend noch näher beschrieben, ein oder mehrere Lichtschranken verwendet werden.

Im Rahmen eines weiteren Verfahrensschrittes erfolgt ein Anpassen einer parallel zur Förderrichtung der Getränkebehältnisse orientierten Bewegungsfahrt der ein oder mehreren Greifköpfe unter Berücksichtigung der erfassten Ist-Position. Beispielsweise kann vorgesehen sein, dass die ein oder mehreren Greifköpfe unmittelbar vor Anpassung ihrer Bewegungsfahrt identisch zur Förder- bzw. Transportgeschwindigkeit der Horizontalfördereinrichtung und/oder identisch zur Geschwindigkeit eines nachfolgend noch näher beschriebenen Anschlags bewegt werden. Weiter können in bevorzugten Ausführungsformen die ein oder mehreren Greifköpfe unmittelbar vor Anpassung ihrer Bewegungsfahrt parallel zur Förderrichtung der Getränkebehältnisse bewegt werden.

Wird eine Ist-Position erkannt, bei welcher Getränkebehältnisse einer ersten Reihe zu Getränkebehältnissen einer oder mehrerer weiterer Reihen nicht fluchten und/oder bei welcher einer Ist-Position einer oder mehrerer Getränkebehältnisse von einer erwarteten Soll-Position abweichen, so kann eine Verzögerung oder Beschleunigung der ein oder mehreren Greifköpfe gegenüber der Fördergeschwindigkeit der Horizontalfördereinrichtung bzw. gegenüber der Geschwindigkeit des Anschlags erfolgen. Die Verzögerung oder Beschleunigung kann derart ausgebildet sein, dass aus der Verzögerung oder Beschleunigung resultierend eine relative Ausrichtung der Aufnahmepositionen der jeweiligen ein oder mehreren Greifköpfe zu den auf der Horizontalfördereinrichtung kontinuierlich bewegten Getränkebehältnissen erfolgt.

Insbesondere haben sich Ausführungsformen bewährt, bei welchen unter Berücksichtigung der erkannten Ist-Position eine Anpassung einer Bewegungsfahrt der ein oder mehreren Greifköpfe zumindest annäherungsweise in Echtzeit durchgeführt wird.

Die Getränkebehältnisse können somit auch bei Abweichen ihrer tatsächlichen Ist-Position in Förderrichtung von einer erwarteten Soll-Position durch eine kurzzeitige Beschleunigung oder kurzzeitige Verzögerung bzw. durch eine Anpassung der jeweiligen Bewegungsfahrt mit ihren Aufnahmepositionen zu den Getränkebehältnissen ausgerichtet werden. Die Gefahr eines Kippens der jeweiligen Getränkebehältnisse bei einer der Anpassung nachfolgenden Entgegennahme durch den jeweiligen Greifkopf sowie das Verfehlen eines Getränkebehältnisses durch den Greifkopf bei Entgegennahme aufgrund Abweichen der Ist-Position von der erwarteten Soll-Position kann hierdurch reduziert oder ausgeschlossen werden.

Ebenso kann es sein, dass die Ist-Position der Getränkebehältnisse von einer erwarteten Soll-Position abweicht, wobei die Getränkebehältnisse der parallelen Reihen jedoch vollständig oder wenigstens anteilig miteinander senkrecht zur Förderrichtung der Getränkebehältnisse fluchten. Auch in diesem Fall kann nach Erkennen der jeweiligen Ist-Position der Getränkebehältnisse und Abweichen von einer erwarteten Soll-Position eine Bewegungsfahrt der ein oder mehreren Greifeinrichtungen angepasst werden, wobei die Aufnahmepositionen der ein oder mehreren Greifeinrichtungen zum Zwecke einer Entgegennahme der jeweilige Getränkebehältnisse zu den Getränkebehältnissen ausgerichtet werden. Die Anpassung einer Bewegungsfahrt der ein oder mehreren Greifeinrichtungen kann im Bedarfsfall über eine Steuerungseinheit, auf welche nachfolgend noch detailliert eingegangen wird, erfolgen.

Nachdem die Bewegungsfahrt der ein oder mehreren Greifköpfe an die erfasste Ist-Position eines oder mehrerer Getränkebehältnisse ggf. angepasst wurde, wird in einem nachfolgenden Verfahrensschritt eine Senkbewegung der ein oder mehreren Greifköpfe während ihrer weiteren Bewegungsfahrt zur Entgegennahme jeweils eines Getränkebehältnisses über jeweils eine seiner mindestens einen Aufnahmepositionen durchgeführt.

Die Bewegungsfahrt der ein oder mehreren Greifköpfe in Förderrichtung kann somit bevorzugt während einer Senkbewegung fortgesetzt werden. Bevorzugt werden die ein oder mehreren Greifköpfe während ihrer Senkbewegung mit den Getränkebehältnissen durchgehend parallel zur Förderrichtung der Getränkebehältnisse bewegt.

Wie vorhergehend bereits erwähnt, kann der mindestens einen Aufnahmeposition der ein oder mehreren Greifköpfe jeweils mindestens eine Greifeinrichtung, wie beispielsweise eine Greiftulpe oder dergleichen, zugeordnet sein, mittel welcher das jeweilige Getränkebehältnis beispielsweise via Unterdruck, klemmend und/oder formschlüssig an dem jeweiligen Greifkopf fixierbar ist. Wurde eine Senkbewegung der ein oder mehreren Greifköpfe durchgeführt, kann danach eine Entgegennahme der jeweiligen Getränkebehältnisse durch die der jeweiligen Aufnahmeposition zugeordnete Greifeinrichtung erfolgen, so dass das oder die jeweiligen Getränkebehältnisse temporär fest mit dem jeweiligen Greifkopf in Verbindung gebracht sind. Die temporäre Verbindung kann während einer nachfolgenden Hebebewegung der ein oder mehreren Greifköpfe weiterhin ausgebildet bleiben, um die jeweiligen Getränkebehältnisse von der Horizontalfördereinrichtung abzuführen. Sofern die jeweiligen Getränkebehältnisse hierauf an weitere Stationen, wie beispielsweise eine Verpackungsmaschine, übergeben werden, kann nach Übergabe die temporäre Verbindung zwischen den ein oder mehreren Greifköpfen und dem oder den jeweiligen Getränkebehältnissen gelöst werden.

Sind mehr als ein Greifkopf vorhanden, so kann in bevorzugten Ausführungsformen vorgesehen sein, dass die Entgegennahme der Getränkebehältnisse über sämtliche der Greifköpfe zumindest annäherungsweise zeitsynchron erfolgt.

Demnach können sämtliche der Greifköpfe ihre Senkbewegung zur Entgegennahme der jeweiligen Getränkebehältnisse zumindest annäherungsweise zeitsynchron durchführen. Insbesondere haben sich Ausführungsformen bewährt, bei welchen Aufnahmepositionen eines ersten der ein oder mehreren Greifköpfe zu Aufnahmepositionen eines zweiten der ein oder mehreren Greifköpfe während ihrer Bewegungsfahrt und während ihrer Senkbewegung in Förderrichtung der Getränkebehältnisse durchgehend miteinander fluchten.

Zudem ist vorgesehen, dass eine Wegnahme der Getränkebehältnisse von der Horizontalfördereinrichtung vermittels einer Hebebewegung der jeweiligen ein oder mehreren Greifköpfe durchgeführt wird. Bevorzugt können während der Wegnahme der Getränkebehältnisse bzw. während der Hebebewegung die ein oder mehreren Greifköpfe weiterhin parallel zur Förderrichtung der Getränkebehältnisse bewegt werden. Die Bewegungsfahrt der ein oder mehreren Greifköpfe kann demnach während der Wegnahme der Getränkebehältnisse von der Horizontalfördereinrichtung weiterhin parallel zur Förderrichtung der Getränkebehältnisse fortgeführt werden.

Vorstellbar ist, dass die jeweiligen Getränkebehältnisse nach durchgeführter Hebebewegung über die jeweiligen ein oder mehreren Greifköpfe direkt in Verpackungseinheiten einer Verpackungsmaschine abgesetzt werden. Hierzu können in diversen Ausführungsformen die ein oder mehreren Greifköpfe bis zum Absetzen der jeweiligen Getränkebehältnisse weiterhin parallel zur Förderrichtung der Getränkebehältnisse bewegt werden und ihre Bewegungsfahrt vorzugsweise unterbrechungslos fortsetzen. Auch ist denkbar, dass die jeweiligen ein oder mehreren Greifköpfe nach Entgegennahme der jeweiligen Getränkebehältnisse umgelenkt und in Richtung der Verpackungseinheiten bewegt werden. Die jeweiligen Verpackungseinheiten können während des Absetzens bewegt werden und hierbei auf einer Horizontalfördereinrichtung aufstehen. Ebenso ist vorstellbar, dass die Verpackungseinheiten auf einer Horizontalfördereinrichtung aufstehen, welche Horizontalfördereinrichtung intermittierend betrieben wird, so dass die Verpackungseinheiten während des Absetzens der Getränkebehältnisse stillstehen. Dem angesprochenen Fachmann ist klar, wie er ein derartiges Absetzen von Getränkebehältnissen in Verpackungseinheiten ggf. umsetzen kann, so dass im Rahmen vorliegender Erfindung nicht näher darauf eingegangen wird.

In einer vorstellbaren Ausführungsform können die Greifköpfe selbst als Greifeinrichtungen, wie beispielsweise Greiftulpen oder dergleichen, ausgebildet sein und hierbei jeweils genau eine Aufnahmeposition für Getränkebehältnisse ausbilden. In bevorzugten Ausführungsformen der vorliegenden Erfindung besitzen die Greifköpfe jedoch für jede Reihe der kontinuierlich geführten Getränkebehältnisse jeweils mindestens eine, vorzugsweise jedoch mehr als eine Aufnahmeposition. Besitzen die ein oder mehreren Greifköpfe jeweils mehr als eine Aufnahmeposition für jede Reihe, so kann das Verfahren mit erhöhtem Durchsatz durchgeführt werden.

Beispielsweise kann es sein, dass die Anzahl an Aufnahmepositionen eines jeden der mindestens einen Greifköpfe mindestens der Anzahl an für eine Verpackungseinheit vorgesehenen Getränkebehältnissen entspricht. Insbesondere haben sich Ausführungsformen bewährt, bei welchen die Anzahl an Aufnahmepositionen eines jeden der mindestens einen Greifköpfe genau der Anzahl an für eine Verpackungseinheit vorgesehenen Getränkebehältnissen entspricht.

Durch eine Entgegennahme an Getränkebehältnissen von der Horizontalfördereinrichtung und nachfolgendem Absetzen in die Verpackungseinheiten kann somit eine Verpackungseinheit über einen Greifkopf vollständig mit Getränkebehältnissen ausgestattet werden. Wie vorhergehend bereits erwähnt, können mehrere Greifköpfe vorhanden sein, die sich synchron bewegen. Durch eine Entgegennahme und ein Absetzen der Getränkebehältnisse über die mehreren synchron bewegten Greifköpfe können somit mehrere Verpackungseinheiten wenigstens annäherungsweise zeitsynchron vollständig mit Getränkebehältnissen ausgestattet werden, womit der Durchsatz des Verfahrens weiter erhöht werden kann.

Sind mehr als eine Aufnahmeposition für jede Reihe der kontinuierlich geführten Getränkebehältnisse vorgesehen, so kann es sein, dass die Aufnahmepositionen jeder Reihe relativ zueinander und in Abhängigkeit der erfassten Ist-Position verstellbar sind. In weiteren Ausführungsformen ist jedoch vorgesehen, dass die Aufnahmepositionen an den ein oder mehreren Greifköpfen fest oder zumindest näherungsweise fest vorgegeben sind. Beispielsweise können hierzu Greifeinrichtungen, wie Greiftulpen oder dergleichen, vorgesehen sein, die an vorgegebenen Positionen am jeweiligen Greifkopf gehalten sind. Ist eine relative Verstellung der Aufnahmepositionen vorgesehen, so können die Greifeinrichtungen, wie Greiftulpen oder dergleichen, relativ zueinander beweglich am jeweiligen Greifkopf angeordnet sein.

Auch bei Ausführungsformen, bei welchen die Aufnahmepositionen zumindest näherungsweise fest vorgegeben sind, kann jeweils eine Greifeinrichtung jeweils eine Aufnahmeposition ausbilden, wobei die Greifeinrichtungen, wie Greiftulpen oder dergleichen, gelenkig am jeweiligen Greifkopf gehalten sind und somit eine gewisse Toleranz der jeweiligen Ist-Position von Getränkebehältnisse bei Entgegennahme erlauben.

Auch kann es sein, dass die ein oder mehreren Greifköpfe während der weiteren Bewegungsfahrt und während der Wegnahme vermittels ihrer Hebebewegung durchgehend geschwindigkeitssynchron zu den Getränkebehältnissen und parallel zu ihrer Förderrichtung bewegt werden. Da durch ein vorhergehendes Anpassen der Bewegungsfahrt der ein oder mehreren Greifköpfe die jeweilige mindestens eine Aufnahmeposition relativ zu den Getränkebehältnissen ausgerichtet worden ist, kann die relative Ausrichtung durch eine durchgehend geschwindigkeitssynchrone Bewegung der ein oder mehreren Greifköpfe während der weiteren Bewegungsfahrt und während der Wegnahme beibehalten werden.

Bevorzugt werden die Getränkebehältnisse mit konstanter Geschwindigkeit mittels der Horizontalfördereinrichtung bewegt, so dass die geschwindigkeitssynchrone Bewegung der ein oder mehreren Greifköpfe während weiterer Bewegungsfahrt und Entgegennahme der Getränkebehältnisse ebenso durchgehend konstant ausgebildet sein kann.

Erfindungsgemäß wird die kontinuierliche Bewegung der Getränkebehältnisse durch wenigstens einen fahrbaren und quer zur Förderrichtung orientierten Anschlag verzögert und eine Geschwindigkeit des Anschlags bei Anpassung der Bewegungsfahrt der ein oder mehreren Greifköpfe berücksichtigt wird. Bevorzugt kann der wenigstens eine fahrbare Anschlag senkrecht zur Förderrichtung der Getränkebehältnisse orientiert sein. Insbesondere kann der fahrbare Anschlag mit jeweils einem vorauseilenden Getränkebehältnis jeweils einer der parallelen Reihen in Oberflächenkontakt gebracht sein.

Da die kontinuierliche Bewegung der Getränkebehältnisse erfindungsgemäß durch den Anschlag verzögert werden soll, kann der fahrbare Anschlag während seiner Bewegung eine Geschwindigkeit aufweisen, die gegenüber der Transportgeschwindigkeit der Horizontalfördereinrichtung vermindert ausgebildet ist. Eine Verzögerung ist aus dem Grunde sinnvoll, da hierdurch die jeweiligen mittels der Horizontalfördereinrichtung transportieren Getränkebehältnisse miteinander in Anlage gebracht werden können, so dass nachfolgende Getränkebehältnisse einer Reihe an ihrem jeweiligen direkt vorauseilenden Getränkebehältnis der gleichen Reihe anstehen.

Die jeweilige Ist-Position der Getränkebehältnisse kann hierdurch mit erhöhter Genauigkeit vorhergesagt werden, da durch die Verzögerung mittels des Anschlags kein Abstand zwischen vorauseilenden und nachfolgenden Getränkebehältnissen einer Reihe besteht bzw. da durch die Verzögerung mittels des Anschlags ein Abstand zwischen vorauseilenden und nachfolgenden Getränkebehältnissen geschlossen werden kann.

Bei diversen Ausführungsformen können mehrere derartige Anschläge vorhanden sein, die sich jeweils mit gleicher Geschwindigkeit in Förderrichtung der Getränkebehältnisse bewegen und jeweils die kontinuierliche Förderbewegung einer bestimmten Anzahl an Getränkebehältnissen verzögern. Die bestimmte Anzahl an Getränkebehältnissen kann hierbei mindestens der Anzahl an Getränkebehältnissen entsprechen, welche durch eine Senkbewegung der ein oder mehreren Greifköpfe entgegengenommen werden können.

Weiter können mindestens zwei in Förderrichtung hintereinander fahrende Greifköpfe vorgesehen sein, die während ihrer Bewegungsfahrt unmittelbar vor deren jeweiliger Anpassung geschwindigkeitssynchron zu den Getränkebehältnissen bewegt werden, wobei eine Anpassung ihrer Bewegungsfahrten durch einen jeweiligen Korrekturversatz in oder gegen die Förderrichtung der Getränkebehältnisse mit direkt nachfolgender Wiederaufnahme ihrer geschwindigkeitssynchronen Bewegungsfahrt erfolgt. Beispielsweise kann es sein, dass der jeweilige Greifkopf für seinen Korrekturversatz kurzzeitig gegenüber der Transportgeschwindigkeit der Horizontalfördereinrichtung verzögert oder beschleunigt wird.

Insbesondere bei forminstabilen Getränkebehältnissen hat sich gezeigt, dass die erwartete Soll-Position von Getränkebehältnissen in Gegenrichtung ihrer Förderbewegung zunehmend von einer tatsächlichen Ist-Position abweicht. Um mehrere hintereinander in Förderrichtung angeordnete Greifköpfe mit ihren Aufnahmepositionen möglichst genau zu den Getränkebehältnissen ausrichten zu können, haben sich Ausführungsformen bewährt, bei welchen ein erster Korrekturversatz eines ersten in Förderrichtung vorauseilenden der mindestens zwei Greifköpfe um einen ersten Betrag durchgeführt wird und ein zweiter Korrekturversatz eines zweiten in Förderrichtung nacheilenden der mindestens zwei Greifköpfe um einen zweiten Betrag durchgeführt wird. Der zweite Betrag kann hierbei gegenüber dem ersten Betrag vergrößert ausgebildet sein. Beide Greifköpfe können ihren jeweiligen Korrekturversatz zeitgleich und in Abhängigkeit der jeweiligen ermittelten Ist-Position von Getränkebehältnissen durchführen. Der jeweilige Betrag des Korrekturversatzes kann über eine Steuerungseinheit vorgegeben werden, an welche die jeweilige Ist-Position übertragen wird und welche mit den mindestens zwei Greifköpfen in Wirkverbindung gebracht ist. Sind mindestens ein erster Greifkopf und mindestens ein zweiter Greifkopf vorhanden, so können der mindestens eine erste Greifkopf und der mindestens eine zweite Greifkopf parallel zur Förderrichtung der Getränkebehältnisse relativ zueinander beweglich ausgebildet sein.

Das Anpassen einer Bewegungsfahrt eines ersten der mindestens zwei Greifköpfe kann somit bei Anpassen einer Bewegungsfahrt eines zweiten der mindestens zwei Greifköpfe berücksichtigt werden. Das Anpassen der Bewegungsfahrten kann derart erfolgen, dass bestimmte Aufnahmepositionen eines ersten der mindestens zwei Greifköpfe durchgehend zu bestimmten Aufnahmepositionen eines zweiten der mindestens zwei Greifköpfe in Förderrichtung der Getränkebehältnisse miteinander fluchten.

Demnach kann das Anpassen einer Bewegungsfahrt eines ersten der mindestens zwei Greifköpfe bei Anpassen einer Bewegungsfahrt eines zweiten der mindestens zwei Greifköpfe derart erfolgen, dass eine Relativposition der beiden Greifköpfe zueinander während des Anpassens der Bewegungsfahrt verändert wird, so dass sich der relative Abstand des mindestens einen ersten Greifkopfes zum mindestens einen zweiten Greifkopf in Förderrichtung vergrößert oder verkleinert. Bevorzugt kann nach Anpassen der jeweiligen Bewegungsfahrt und bei nachfolgender weiterer Bewegungsfahrt der relative Abstand des mindestens einen ersten Greifkopfes zum relativen Abstand des mindestens einen zweiten Greifkopfes parallel zur Förderrichtung der Getränkebehältnisse beibehalten werden.

Weiter können die mindestens zwei Greifköpfe eine Senkbewegung zur Entgegennahme der Getränkebehältnisse von der Horizontalfördereinrichtung und/oder eine Hebebewegung zur Wegnahme der Getränkebehältnisse von der Horizontalfördereinrichtung synchron durchführen. Wie soeben erwähnt, kann die Relativposition der Greifköpfe bei Entgegennahme und/oder Wegnahme der jeweiligen Getränkebehältnisse nach Anpassen der Bewegungsfahrt unverändert beibehalten werden.

Denkbar ist zudem, dass die Ist-Position der ein oder mehreren kontinuierlich bewegten Getränkebehältnisse durch ein oder mehrere Lichtschranken mit senkrecht zur Förderrichtung der Getränkebehältnisse orientiertem Detektionsbereich erfasst wird. Um die tatsächliche Ist-Position von Getränkebehältnissen in Förderrichtung mit hoher Genauigkeit vorhersagen zu können, haben sich insbesondere Ausführungsformen bewährt, bei welchen wenigstens zwei Lichtschranken mit senkrecht zur Förderrichtung der Getränkebehältnisse orientiertem Detektionsbereich vorhanden sind.

Eine erste der wenigstens zwei Lichtschranken kann hierbei in Förderrichtung der Getränkebehältnisse einer zweiten der wenigstens zwei Lichtschranken vorgeordnet sein. Sind mehr als eine Lichtschranke zur Umsetzung des erfindungsgemäßen Verfahrens vorgesehen, so können die jeweiligen durch sämtliche der Lichtschranken ermittelten Ist-Positionen der Getränkebehältnisse bei Anpassung der Bewegungsfahrt der ein oder mehreren Greifköpfe berücksichtigt werden. Beispielsweise kann es sein, dass eine Ist-Position von Getränkebehältnissen über eine erste Lichtschranke erfasst wird, zudem eine Ist-Position von Getränkebehältnissen über eine zweite Lichtschranke zeitgleich erfasst wird und eine Bewegungsfahrt der ein oder mehreren Greifköpfe unter Berücksichtigung beider erfassten Ist-Position zumindest annäherungsweise in Echtzeit angepasst wird.

Weiter kann es sein, dass wenigstens einer der Greifköpfe erste Aufnahmepositionen für Getränkebehältnisse einer ersten der parallel geführten Reihen besitzt und zweite Aufnahmepositionen für Getränkebehältnisse einer zweiten der parallel geführten Reihen besitzt. In Abhängigkeit der erfassten Ist-Position von Getränkebehältnissen können hierbei die ersten Aufnahmepositionen relativ zu den zweiten Aufnahmepositionen in oder gegen die Förderrichtung der Getränkebehältnisse verstellt werden. In der Praxis hat sich gezeigt, dass insbesondere bei forminstabilen Behältern die Ist-Position von Getränkebehältnissen einer ersten Reihe zu Getränkebehältnissen einer zweiten Reihe häufig von der erwarteten Soll-Position abweicht. Durch die im Rahmen diverser Ausführungsformen mögliche relative Verstellung der Aufnahmepositionen der jeweiligen Reihen kann die Entgegennahme von Getränkebehältnissen mit zusätzlicher Genauigkeit und weiterer Reduzierung einer Kollision bei Senkbewegung erfolgen.

Sind mehr als zwei parallele Reihen, beispielsweise drei oder vier parallele Reihen, vorgesehen, welche durch die Horizontalfördereinrichtung bewegt werden, so können jeder der Reihen Aufnahmepositionen zugeordnet sein, welche relativ zueinander verstellt werden können.

Weiter kann es sein, dass mindestens zwei Greifköpfe mit jeweils relativ zueinander in oder gegen die Förderrichtung verstellbaren ersten und zweiten Aufnahmepositionen vorgesehen sind, wobei eine Verstellung der ersten und zweiten Aufnahmepositionen eines ersten der mindestens zwei Greifköpfe unter Berücksichtigung einer Verstellung der ersten und zweiten Aufnahmepositionen eines zweiten der mindestens zwei Greifköpfe erfolgt.

Sofern unter Berücksichtigung der jeweiligen erfassten Ist-Position eine Verstellung der ersten Aufnahmepositionen eines ersten Greifkopfes vorgesehen ist, kann eine Verstellung der ersten Aufnahmepositionen des ersten Greifkopfes mit einer zumindest annäherungsweise zeitsynchronen Verstellung der ersten Aufnahmepositionen des zweiten Greifkopfes einhergehen. Die ersten Aufnahmepositionen eines in Förderrichtung nacheilenden Greifkopfes können um einen größeren Betrag als die ersten Aufnahmepositionen eines in Förderrichtung vorauseilenden Greifkopfes verstellt werden.

Auch können in weiteren Ausführungsformen der Betrag und die Richtung, mit welcher die ersten Aufnahmepositionen des ersten Greifkopfes bei Anpassung in oder gegen die Förderrichtung der Getränkebehältnisse verstellt werden, identisch zum Betrag und zur Richtung, mit welcher die ersten Aufnahmepositionen des zweiten Greifkopfes bei Anpassung in oder gegen die Förderrichtung der Getränkebehältnisse verstellt werden, ausgebildet sein.

Sind mehr als zwei Greifköpfe, beispielsweise drei oder vier Greifköpfe vorgesehen, so kann die Verstellung ihrer jeweiligen ersten bzw. zweiten Aufnahmepositionen bei Anpassung ebenso zeitsynchron erfolgen. Hierbei können die der jeweiligen Reihe zugeordneten Aufnahmepositionen miteinander in Förderrichtung der Getränkebehältnisse vor, bei und nach Verstellung fluchten.

Die vorliegende Erfindung betrifft zudem ein System zum Abführen von Getränkebehältnissen, welche im geordneten und zumindest näherungsweise geschlossenen Massenstrom mittels einer Horizontalfördereinrichtung in parallelen Reihen kontinuierlich bewegbar sind.

Vorab sei erwähnt, dass diverse Merkmale, welche bereits vorherig zum erfindungsgemäßen Verfahren beschrieben wurden, ebenso bei zahlreichen Ausführungsformen des erfindungsgemäßen Systems Verwendung finden können. Ebenso können diverse Merkmale, welche nachfolgend zum erfindungsgemäßen System beschrieben werden, auch bei zahlreichen Ausführungsformen eines erfindungsgemäßen Verfahrens Verwendung finden.

Die Horizontalfördereinrichtung kann als Endlosförderband ausgebildet sein, auf welcher die jeweiligen Getränkebehältnisse in parallelen Reihen geführt aufstehen. Hierbei können durch Gassenbleche und/oder Seitenwände mehrere parallel zueinander verlaufende Transportbahnen für die jeweiligen Getränkebehältnisse gebildet werden, wobei die Gassenbleche und/oder Seitenwände die jeweiligen Getränkebehältnisse in den parallel zueinander verlaufenden Transportbahnen führen.

Beispielsweise können die Getränkebehältnisse vor Transport durch die Horizontalfördereinrichtung im ungeordneten Massenstrom bewegt werden. Vorstellbar ist hierbei, dass der Horizontalfördereinrichtung eine Einrichtung vorgeordnet ist, welche die jeweiligen Getränkebehältnisse den parallelen Reihen zuführt bzw. welche die jeweiligen Getränkebehältnisse in die parallelen Reihen lenkt und einteilt.

Das erfindungsgemäße System umfasst ein oder mehrere Greifköpfe, wenigstens eine Detektionseinrichtung zum Erfassen einer Ist-Position von Getränkebehältnissen in Förderrichtung sowie eine Steuerungseinheit, die derart mit der Detektionseinrichtung und den ein oder mehreren Greifköpfen in Wirkverbindung gebracht ist, dass via die Steuerungseinheit eine parallel zur Förderrichtung der Getränkebehältnisse orientierte Bewegungsfahrt der ein oder mehreren Greifköpfe unter Berücksichtigung der erfassten Ist-Position anpassbar ist.

Beispielsweise kann die Geschwindigkeit der ein oder mehreren Greifköpfe bei Bewegungsfahrt identisch zur Transportgeschwindigkeit der Horizontalfördereinrichtung ausgebildet sein. Weiter ist vorstellbar, dass bei Anpassen der Bewegungsfahrt eine Verzögerung der ein oder mehreren Greifköpfe gegenüber der Transportgeschwindigkeit der Horizontalfördereinrichtung und/oder gegenüber der Geschwindigkeit eines fahrenden Anschlages oder eine Beschleunigung der ein oder mehreren Greifköpfe gegenüber der Transportgeschwindigkeit der Horizontalfördereinrichtung und/oder gegenüber der Geschwindigkeit eines fahrenden Anschlages über die Steuerungseinheit vorgegeben wird. Weiter können nach Verzögerung oder Beschleunigung die ein oder mehreren Greifköpfe mit einer Geschwindigkeit bewegt werden, die wiederum identisch zur Transportgeschwindigkeit der Horizontalfördereinrichtung bzw. zur Geschwindigkeit des fahrenden Anschlages ausgebildet ist. Über eine derartige Verzögerung oder Beschleunigung können die Aufnahmepositionen der ein oder mehreren Greifköpfe zur Ist-Position der mittels der Horizontalfördereinrichtung transportieren Getränkebehältnisse ausgerichtet werden.

Die ein oder mehreren Greifköpfe können mit einer oberhalb der Horizontalfördereinrichtung angeordneten Linearführung in Verbindung gebracht sein, mittels welcher die ein oder mehreren Greifköpfe wenigstens abschnittsweise entlang der Horizontfördereinrichtung hin und her bewegbar sind.

Erfindungsgemäß besitzen die ein oder mehreren Greifköpfe jeweils eine oder mehrere Aufnahmepositionen, die zur Entgegennahme der Getränkebehältnisse über eine Senkbewegung der ein oder mehreren Greifköpfe mit nachfolgender Wegnahme der Getränkebehältnisse von der Horizontalfördereinrichtung zeitlich nach Anpassung der Bewegungsfahrt ausgebildet sind. Den ein oder mehreren Greifköpfen des erfindungsgemäßen Systems kann für jede ihrer Aufnahmepositionen eine eigene Greifeinrichtung zugeordnet sein, mittels welcher die jeweiligen Getränkebehältnisse bei Entgegennahme gehalten werden können. Beispielsweise können die jeweiligen Greifeinrichtungen zum kraft- und/oder formschlüssigen Halten der Getränkebehältnisse ausgebildet sein.

Weiter ist vorstellbar, dass die Greifeinrichtungen, welche ggf. jeweils einer Aufnahmeposition zugeordnet sind, zur rotierenden Bewegung der Getränkebehältnisse nach Entgegennahme ausgebildet sind. Hierzu können die jeweiligen Greifeinrichtungen mit der Steuerungseinheit in Verbindung gebracht sein, welche eine rotierende Bewegung der jeweiligen Getränkebehältnisse vor nachfolgendem Absetzen, beispielsweise in einer Verpackungsmaschine bzw. in entsprechenden Verpackungseinheiten, bewirkt. Sofern die Getränkebehältnisse bereits mit einer Kennzeichnung, wie beispielsweise einem Etikett oder dergleichen, versehen sind, kann nach Entgegennahme der Getränkebehältnisse eine rotierende Ausrichtung der Getränkebehältnisse unter Berücksichtigung einer Position der jeweiligen Kennzeichnung erfolgen.

Da die Steuerungseinheit vorzugsweise mit den Greifeinrichtungen in Wirkverbindung gebracht ist, kann ggf. ein Halten der jeweiligen Getränkebehältnisse über die jeweilige Greifeinrichtung sowie ein nachfolgendes Lösen der Verbindung zwischen Greifeinrichtung und dem jeweiligen Getränkebehältnis über die Steuerungseinheit vorgebbar sein.

Die Detektionseinrichtung ist bevorzugt als optisches Erfassungssystem, wie beispielsweise eine Kamera oder dergleichen, ausgebildet. Insbesondere kann die Detektionseinrichtung wenigstens eine, vorzugsweise jedoch mehrere entlang einer Förderstrecke der Getränkebehältnisse angeordnete Lichtschranken umfassen, wobei der Detektionsbereich der wenigstens einen Lichtschranke sich senkrecht zur Förderrichtung der Getränkebehältnisse erstreckt. Die Steuerungseinheit kann an die ein oder mehreren Lichtschranken kabellos oder via Kabelverbindung gekoppelt sein.

In bevorzugten Ausführungsformen kann das System wenigstens zwei Lichtschranken umfassen, die an unterschiedlichen Positionen entlang der Horizontalfördereinrichtung bzw. an unterschiedlichen Positionen entlang einer Förderstrecke der Getränkebehältnisse bzw. an unterschiedlichen Positionen in Förderrichtung der Getränkebehältnisse versetzt angeordnet sind. Beide der wenigstens zwei Lichtschranken können zur Erfassung einer Ist-Position von Getränkebehältnissen ausgebildet sein und mit der Steuerungseinheit in Verbindung stehen. Weiter kann die Steuerungseinheit unter Berücksichtigung der durch die wenigstens zwei Lichtschranken erfassten Ist-Positionen eine Anpassung der Bewegungsfahrt der ein oder mehreren Greifköpfe vornehmen.

Insbesondere bei forminstabilen Getränkebehältnissen kann eine Ist-Position an einer ersten Stelle entlang der Förderrichtung von Getränkebehältnissen um einen ersten Betrag von einer erwarteten Soll-Position abweichen und an einer weiteren Stelle entlang der Förderrichtung um einen zweiten Betrag von einer erwarteten Soll-Position abweichen, wobei der erste Betrag und der zweite Betrag unterschiedlich ausgebildet sind. Vermittels geeigneter und auf der Steuerungseinheit abgelegter Algorithmen kann bei Verwendung von mehreren Lichtschranken mit entsprechender Erfassung der Soll-Position eine genauere Prognose über die zu erwartende Position in Förderrichtung von Getränkebehältnissen getroffen werden. Eine genauere Aufnahme von Getränkebehältnissen mit reduziertem Risiko einer Kollision kann bei Ausführungsformen mit wenigstens zwei Lichtschranken erfolgen.

Weiter kann das System mindestens zwei in Förderrichtung hintereinander fahrbare Greifköpfe umfassen, die während ihrer Bewegungsfahrt unmittelbar vor deren jeweiliger Anpassung geschwindigkeitssynchron zu den Getränkebehältnissen bewegbar sind. Über die Steuerungseinheit kann eine Anpassung ihrer Bewegungsfahrten durch einen jeweiligen Korrekturversatz in oder gegen die Förderrichtung der Getränkebehältnisse mit direkt nachfolgender Wiederaufnahme ihrer geschwindigkeitssynchronen Bewegungsfahrt vorgebbar sein. Der Korrekturversatz kann derart vorgegeben werden, dass dieser für einen in Förderrichtung vorauseilenden Greifkopf gegenüber einem in Förderrichtung nacheilenden Greifkopf betragsmäßig vermindert ausgebildet ist.

Über die Steuerungseinheit kann somit eine Anpassung der Bewegungsfahrt eines ersten der mindestens zwei Greifköpfe unter Berücksichtigung einer Anpassung der Bewegungsfahrt eines zweiten der mindestens zwei Greifköpfe erfolgen. Hierbei kann es sein, dass die mindestens zwei Greifköpfe ihre Relativposition bei Anpassung der Bewegungsfahrt in Förderrichtung der Getränkebehältnisse vergrößern oder verkleinern.

Wie vorhergehend erwähnt, kann zur Anpassung der Bewegungsfahrt bzw. im Rahmen des jeweiligen Korrektuversatzes eine Verzögerung oder Beschleunigung der ein oder mehreren Greifköpfe zur Transportgeschwindigkeit der Horizontalfördereinrichtung bzw. zur Geschwindigkeit eines fahrenden Anschlages in oder gegen die Förderrichtung der Getränkebehältnisse erfolgen. Hierbei ist in weiteren Ausführungsformen auch vorstellbar, dass bei Anpassung einer Bewegungsfahrt sämtliche Greifköpfe mit gleichem Betrag in oder gegen die Förderrichtung der Getränkebehältnisse beschleunigt oder verzögert werden bzw. dass der Korrekturversatz bei Anpassung der Bewegungsfahrt für sämtliche der Greifköpfe identisch ausgebildet ist.

Sofern mehrere Greifköpfe vorhanden sind, kann somit in Abhängigkeit der jeweiligen erfassten Ist-Position eine Anpassung der Bewegungsfahrten sämtlicher Greifköpfe erfolgen. Vorzugsweise erfolgt die Anpassung der Bewegungsfahrten für sämtliche Greifköpfe zeitsynchron.

Auch ist vorstellbar, dass die ein oder mehreren Greifköpfe für jede parallele Reihe der kontinuierlich bewegten Getränkebehältnisse jeweils mindestens eine, vorzugsweise jedoch jeweils mehrere Aufnahmepositionen ausbilden, wobei erste Aufnahmepositionen für die erste Reihe in oder gegen die Förderrichtung der Getränkebehältnisse relativ zu zweiten Aufnahmepositionen für die zweite Reihe in Abhängigkeit der über die Detektionseinrichtung erfassten Ist-Position von Getränkebehältnissen verstellbar sind.

Umfasst das System wenigstens einen ersten und wenigstens einen zweiten Greifkopf, so können der wenigstens eine erste und der wenigstens eine zweite Greifkopf jeweils erste und zweite relativ zueinander verstellbare Aufnahmepositionen für die erste und zweite Reihe ausbilden. Über die Steuerungseinheit kann hierbei eine Verstellung der ersten und zweiten Aufnahmepositionen des ersten Greifkopfes in Abhängigkeit einer Verstellung der ersten und zweiten Aufnahmepositionen des zweiten Greifkopfes vorgebbar sein.

Der wenigstens eine zweite Greifkopf kann bei seiner Bewegungsfahrt dem wenigstens einen ersten Greifkopf folgen. Die ersten Aufnahmepositionen des ersten Greifkopfes können mit den ersten Aufnahmepositionen des zweiten Greifkopfes in Förderrichtung der Getränkebehältnisse fluchten. Die Steuerungseinheit kann zur Verstellung der jeweiligen ersten bzw. zweiten Aufnahmepositionen in oder gegen die Förderrichtung in Abhängigkeit der durch die Detektionseinrichtung erfassten Ist-Position von Getränkebehältnissen ausgebildet sein.

Weiter kann vorgesehen sein, dass bei notwendiger Verstellung der ersten Aufnahmepositionen einer der Greifköpfe ein zumindest annäherungsweise zeitsynchrones Verstellen der ersten Aufnahmepositionen der weiteren Greifköpfe in oder gegen die Förderrichtung um den gleichen oder mit unterschiedlichem und durch die Steuerungseinheit vorgegebenem Betrag erfolgt. Ebenso kann bei notwendiger Verstellung der zweiten Aufnahmepositionen einer der Greifköpfe ein zumindest annäherungsweise zeitsynchrones Verstellen der zweiten Aufnahmepositionen der weiteren Greifköpfe in oder gegen die Förderrichtung der Getränkebehältnisse um den gleichen oder mit unterschiedlichem und durch die Steuerungseinheit vorgegebenem Betrag erfolgen. Für den angesprochenen Fachmann ist klar, dass auch bei mehr als zwei parallelen Reihen jeder der ein oder mehreren Greifköpfe für jede der Reihen mehrere Aufnahmepositionen ausbilden kann, wobei sämtliche Aufnahmepositionen sämtlicher Greifköpfe für die jeweilige Reihe zumindest annäherungsweise zeitsynchron und um den gleichen Betrag oder mit unterschiedlichem und durch die Steuerungseinheit vorgegebenem Betrag in oder gegen die Förderrichtung der Getränkebehältnisse verstellt werden können.

Erfindungsgemäß umfasst das System einen fahrenden und quer zur Förderrichtung der Getränkebehältnisse orientierten Anschlag zur Verzögerung der Getränkebehältnisse, welcher Anschlag mit der Steuerungseinheit in Wirkverbindung gebracht ist, so dass über die Steuerungseinheit unter Berücksichtigung einer Geschwindigkeit des Anschlags eine Anpassung der Bewegungsfahrt des mindestens einen Greifkopfes durchführbar ist.

In besonders bevorzugten Ausführungsformen können mehrere derartige Anschläge vorhanden sein, die jeweils mit einem Getränkebehältnis einer jeden der parallelen Reihen in Oberflächenkontakt gebracht sind. Sofern mehrere Anschläge vorhanden sind, können die Anschläge mit gleicher Geschwindigkeit entlang der Förderrichtung der Getränkebehältnisse fahren. Vorzugsweise kann der bzw. können die Anschläge sich senkrecht zur Förderrichtung der Getränkebehältnisse quer über die Horizontalförderrichtung und die parallelen Reihen erstrecken.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Seitenansicht einer Ausführungsform eines erfindungsgemäßen Systems;
Figuren 2 zeigen eine schematische Draufsicht auf eine Ausführungsform eines erfindungsgemäßen Systems unter Verdeutlichung der Anpassung einer Bewegungsfahrt von mehreren Greifköpfen;
Figur 3 zeigt eine schematische Perspektivansicht einer Ausführungsform eines erfindungsgemäßen Systems;
Figur 4 zeigt wesentliche Schritte einer Ausführungsform eines erfindungsgemäßen Verfahrens;

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie das erfindungsgemäße System oder das erfindungsgemäße Verfahren ausgestaltet sein können und stellen keine abschließende Begrenzung dar.

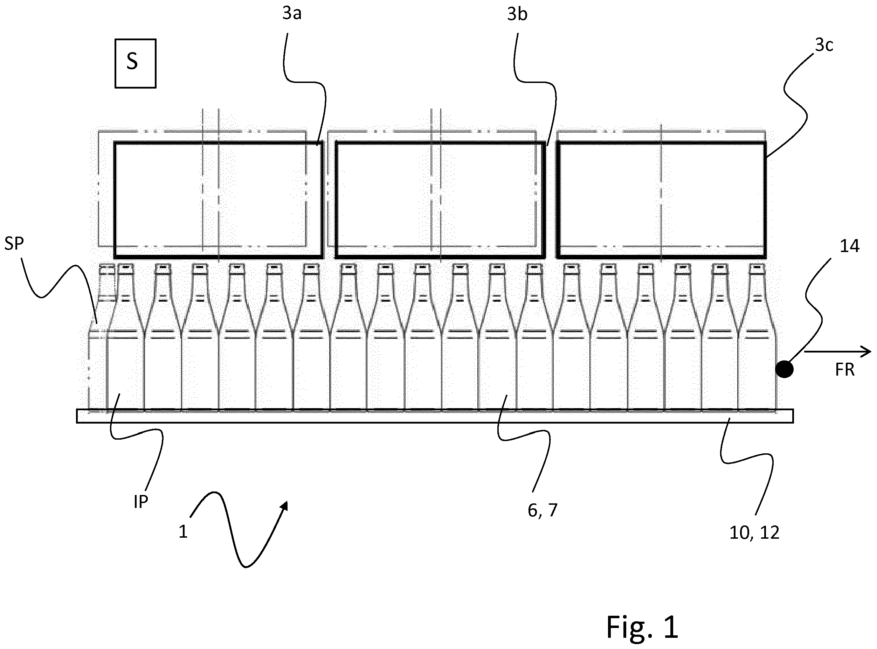

**Figur 1** zeigt eine schematische Seitenansicht einer Ausführungsform eines erfindungsgemäßen Systems 1.

Das System 1 ist vorgesehen zum Abführen von Getränkebehältnissen 6, die vorliegend durch PET-Flaschen 7 ausgebildet sind, von einer Horizontalfördereinrichtung 10. Die Getränkebehältnisse 6 bzw. die PET-Flaschen 7 werden über die Horizontalfördereinrichtung 10 bzw. das Endlosförderband 12 im geschlossenen und geordneten Massenstrom bewegt.

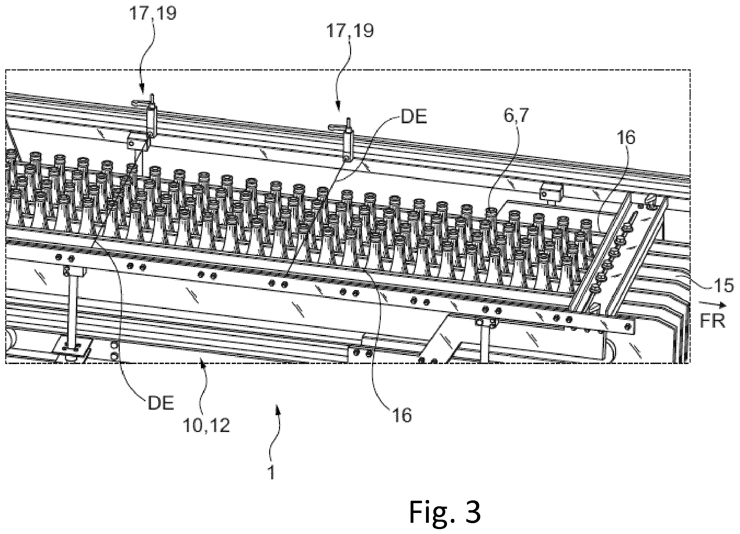

In der Seitenansicht aus Figur 1 ist lediglich eine der parallel geführten Reihen an Getränkebehältnissen 6 zu erkennen, jedoch werden mehrere derartige Reihen parallel zueinander mittels des Endlosförderbandes 12 geführt und sind hierbei über in Figur 1 ebenso nicht zu erkennende Gassenbleche 15 (vgl. Figur 3) getrennt. Mittels Pfeildarstellung ist die Förderrichtung FR für die Getränkebehältnisse 6 angedeutet, welche für sämtliche der Reihen parallel verläuft.

Das Endlosförderband 12 wird kontinuierlich und ohne Unterbrechung angetrieben, wobei die Getränkebehältnisse 6 über das Endlosförderband 12 durchgehend mit gleichbleibender Transportgeschwindigkeit bewegt werden.

Das System 1 umfasst im Ausführungsbeispiel aus Figur 1 drei Greifköpfe 3a bis 3c, die in Förderrichtung FR der Getränkebehältnisse 6 bzw. der PET-Flaschen 7 hintereinander angeordnet sind. Die Anzahl der in Figur 1 dargestellten Greifköpfe 3a bis 3c ist lediglich beispielhaft zu verstehen, so dass in diversen weiteren Ausführungsformen mehr als drei Greifköpfe 3a bis 3c oder auch weniger als drei Greifköpfe 3a bis 3c vorhanden sein können.

Zudem sind zwei in Förderrichtung FR nacheinander angeordnete Detektionseinrichtungen 17 vorgesehen, die als Lichtschranken 19 ausgebildet sind. In der schematischen Ansicht aus Figur 1 wurden die Detektionseinrichtungen 17 bzw. die Lichtschranken 19 nicht mit dargestellt, jedoch sind die Detektionseinrichtungen 17 bzw. die Lichtschranken 19 mit ihrer möglichen Anordnung entlang der Horizontalfördereinrichtung 12 beispielhaft im Ausführungsbeispiel der Figur 3 zu erkennen.

Die Greifköpfe 3a, 3b und 3c bewegen sich im Rahmen einer Bewegungsfahrt parallel zur Förderrichtung FR der Getränkebehältnisse 6 und entlang einer Längserstreckung der Horizontalfördereinrichtung 10 bzw. des Endlosförderbandes 12. Hierzu sind die Greifköpfe 3a bis 3c mit einer oberhalb der Getränkebehältnisse 6 angeordneten Linearführung in Verbindung gebracht. Die Geschwindigkeit der Greifköpfe 3a bis 3c ist zunächst vor Anpassung ihrer Bewegungsfahrt und Entgegennahme der Getränkebehältnisse 6 geschwindigkeitssynchron zur Bewegung des fahrbaren Anschlags 14 ausgebildet, mit welchem ein jeweils zuvorderst angeordnetes Getränkebehältnis 6 einer jeden Reihe in Kontakt steht. Die Geschwindigkeit des Anschlags 14 ist gegenüber der Transportgeschwindigkeit der Horizontalfördereinrichtung 10 vermindert. Ebenso bewegt sich der Anschlag 14 in Förderrichtung FR der Getränkebehältnisse 6 bzw. der PET-Flaschen 7.

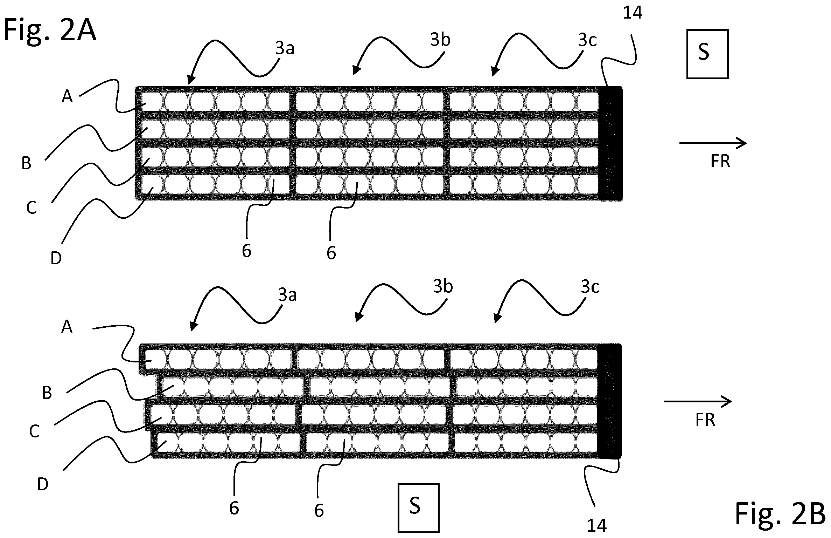

Jeder der Greifköpfe 3a bis 3c besitzt für jede Reihe der parallel transportierten Getränkebehältnisse 6 mehrere Aufnahmepositionen A, B, C, und D wie sie in Figur 2 dargestellt sind und nachfolgend noch detailliert beschrieben werden.

Zudem ist schematisch eine Steuerungseinheit S dargestellt, die mit den Greifköpfen 3a bis 3c sowie mit der Detektionseinrichtung 17 bzw. den Lichtschranken 19 in Wirkverbindung gebracht ist. Auf der Steuerungseinheit S sind Angaben zur jeweiligen Soll-Position SP von Getränkebehältnissen 6 hinterlegt bzw. gespeichert, welche sie bei ihrem Transport mittels der Horizontalfördereinrichtung 12 über den Zeitverlauf einnehmen können. Der Steuerungseinheit S ist weiterhin eine Geschwindigkeit des Anschlags 14 bekannt, an welchem zuvorderst angeordnete Getränkebehältnisse 6 einer Reihe anstehen.

In Abhängigkeit der Soll-Positionen SP über den Zeitverlauf werden die Greifköpfe 3a bis 3c in Förderrichtung FR entlang der Horizontalfördereinrichtung 12 geführt und besitzen hierbei bei ihrer Bewegungsfahrt zunächst eine Geschwindigkeit, welche identisch zur Geschwindigkeit des Anschlages 14 ausgebildet ist. Die Greifköpfe 3a bis 3c werden daher zumindest näherungsweise geschwindigkeitssynchron mit den Getränkebehältnissen 6 bewegt.

Da die Getränkebehältnisse 6 als PET-Behälter 7 ausgebildet sind, welche zu Forminstabilitäten neigen, kann es sein, dass aufgrund der Forminstabilität und aus dem druckbeaufschlagten Oberflächenkontakt der aneinander anstehenden Getränkebehältnisse 6 eine Verformung eines oder mehrerer der Getränkebehältnisse 6 resultiert. Aufgrund der Verformung kann die tatsächliche Ist-Position IP eines oder mehrere der Getränkebehältnissen 6 von einer erwarteten Soll-Position SP abweichen. In Figur 1 ist gut zu erkennen, dass die Ist-Position IP der Getränkebehältnisse 6 in Förderrichtung FR der Soll-Position SP vorauseilt.

Wie soeben erwähnt, steht ein zuvorderst angeordnetes Getränkebehältnis 6 einer jeden der parallelen Reihen an einem Anschlag 14 an, welcher Anschlag 14 eine gegenüber der Transportgeschwindigkeit der Horizontalfördereinrichtung 10 bzw. des Endlosförderbandes 12 verminderte Geschwindigkeit besitzt und den Transport der Getränkebehältnisse 6 verzögert. Der Anschlag 14 ist senkrecht zur Förderrichtung FR der Getränkebehältnisse 6 bzw. der PET-Flaschen 7 orientiert. Durch die Verzögerung über den Anschlag 14 werden einerseits Lücken in Förderrichtung FR, welche ggf. zwischen aufeinanderfolgenden Getränkebehältnissen 6 ausgebildet sein können, geschlossen. Weiter führt eine Verzögerung zu einem erhöhten druckbeaufschlagten Oberflächenkontakt der Getränkebehältnisse 6, woraus Verformungen der Getränkebehältnisse 6 mit einem bereits beschriebenen Abweichen der tatsächlichen Ist-Position von einer erwarteten Soll-Position resultieren.

Da erfahrungsgemäß in der Praxis mehrere derartige Verformungen bei einer Mehrzahl von Getränkebehältnissen 6 in Förderrichtung FR auftreten, weicht die tatsächliche Ist-Position von Getränkebehältnissen 6 mit Entfernung vom Anschlag 14 zunehmend von einer erwarteten Soll-Position ab.

Um die Getränkebehältnisse 6 während ihrer kontinuierlichen und unterbrechungsfreien Bewegung durch die Horizontalfördereinrichtung 10 bzw. das Endlosförderband 12 aufnehmen zu können, ist ein vorheriges Ausrichten bzw. ein vorhergehendes Anpassen der Bewegungsfahrt der Greifköpfe 3a bis 3c notwendig.

Die Detektionseinrichtung 17 bzw. die Lichtschranken 19 übermitteln hierbei die tatsächliche Ist-Position IP der Getränkebehältnisse 6 in Förderrichtung FR an die Steuerungseinheit S. Die Steuerungseinheit S ist sodann in der Lage, mittels der Informationen zu der tatsächlichen Ist-Position IP der Getränkebehältnisse 6 die Bewegungsfahrt der Greifköpfe 3a bis 3c an die tatsächliche Ist-Position der Getränkebehältnisse 6 in Echtzeit anzupassen, so dass nach Anpassung die Getränkebehältnisse 6 über die Greifköpfe 3a bis 3c ohne Kollision und mit hoher Genauigkeit aufgenommen werden können. Da die Ist-Position IP der Soll-Position vorauseilt, ist zur Anpassung der jeweiligen Bewegungsfahrt der Greifköpfe 3a bis 3c ein Korrekturversatz in Förderrichtung notwendig.

Hierbei werden die Bewegungsfahrten sämtlicher Greifköpfe 3a bis 3c gleichzeitig angepasst. Die vor Anpassung identisch zur Geschwindigkeit des Anschlags 14 ausgebildete Bewegungsfahrt wird hierbei kurzzeitig beschleunigt oder verzögert, so dass die Relativposition der Greifköpfe 3a bis 3c zu den Getränkebehältnissen 6 vermittels der Beschleunigung oder Verzögerung geändert wird und die Greifköpfe 3a bis 3c nach Anpassung ihrer Bewegungsfahrt bzw. nach kurzzeitiger Beschleunigung oder Verzögerung eine geänderte Relativposition zu den Getränkebehältnissen 6 besitzen.

Die Relativposition ist hierbei derart auszubilden, dass die Aufnahmepositionen A, B und C der Greifköpfe 3a bis 3c nach Anpassung der Bewegungsfahrt bzw. nach kurzzeitiger Verzögerung oder Beschleunigung für eine Entgegennahme der Getränkebehältnisse 6 zu den Getränkebehältnissen 6 ausgerichtet sind (Vgl. Fig. 2). Wie voranstehend bereits erwähnt, weicht die tatsächliche Ist-Position von Getränkebehältnissen 6 mit Entfernung vom Anschlag 14 zunehmend von einer erwarteten Soll-Position ab. Ein Korrekturversatz in oder gegen die Förderrichtung FR der Getränkebehältnisse 6 ist für den vorauseilenden Greifkopf 3c betragsmäßig daher geringer ausgebildet als ein Korrekturversatz des in Förderrichtung FR nacheilenden Greifkopfes 3b. Weiterhin ist ein Korrekturversatz in oder gegen die Förderrichtung FR der Getränkebehältnisse 6 für den Greifkopf 3b betragsmäßig geringer ausgebildet als ein Korrekturversatz des in Förderrichtung dem Greifkopf 3b nacheilenden Greifkopf 3a.

Unmittelbar nach Anpassung der jeweiligen Bewegungsfahrten können die Greifköpfe 3a bis 3c während ihrer weiteren Bewegungsfahrt erneut geschwindigkeitssynchron mit dem Anschlag 14 bzw. mit den Getränkebehältnissen 6 bewegt werden, so dass die Relativposition zwischen den Greifköpfen 3a bis 3c und den jeweiligen Getränkebehältnissen 6 bzw. den PET-Flaschen 7 beibehalten wird und die Greifköpfe 3a bis 3c ohne Kollision die Getränkebehältnisse 6 in ihren jeweiligen Aufnahmepositionen A, B und C entgegennehmen können.

Hierzu werden die Greifköpfe 3a bis 3c gleichzeitig in Richtung der Horizontalfördereinrichtung 12 abgesenkt und während weiterer Bewegungsfahrt mit den Getränkebehältnissen 6 unter Beibehalten ihrer Relativposition zu den Getränkebehältnissen 6 bewegt.

Jeder Aufnahmeposition A, B und C der Greifköpfe 3a bis 3c ist eine eigene Greifeinrichtung bzw. Greiftulpe zugeordnet, die in Figur 1 aus Gründen der Übersichtlichkeit nicht mit dargestellt wurde. Die Greifeinrichtungen sind ebenso mit der Steuerungseinheit S in Verbindung gebracht. Zur Entgegennahme der Getränkebehältnisse 6 bzw. der PET-Flaschen 7 von der Horizontalfördereinrichtung 10 können die Greifeinrichtungen die jeweiligen Getränkebehältnisse 6 am jeweiligen Greifkopf 3a bis 3c temporär fixieren. Ein Zeitpunkt der Fixierung kann über die Steuerungseinheit S vorgegeben werden.

Nach erfolgter temporärer Fixierung der Getränkebehältnisse 6 bzw. PET-Flaschen 7 am jeweiligen Greifkopf 3a bis 3c werden die Greifköpfe 3a bis 3c zeitgleich in Richtung weg von der Horizontalfördereinrichtung 10 bzw. dem Endlosförderband 12 angehoben. Die Geschwindigkeit der Greifköpfe 3a bis 3c ist hierbei weiterhin identisch zur Geschwindigkeit des Anschlags 14 ausgebildet.

In besonders bevorzugten Ausführungsformen können die mit der Steuerungseinheit S in Verbindung stehenden Greifeinrichtungen rotieren bzw. die jeweiligen entgegengenommen Getränkebehältnisse 6 rotierend bewegen, so dass ggf. eine Kennzeichnung, wie beispielsweise ein Etikett, der Getränkebehältnisse 6 während ihrem Abführen von der Horizontalfördereinrichtung 10 bzw. dem Endlosförderband 12 ausgerichtet werden kann.

In der Praxis können mittels der Horizontalfördereinrichtung 10 bzw. dem Endlosförderband 12 eine Vielzahl von unterschiedlichen Getränkebehältnissen 6 transportiert werden, die sich in Materialart sowie Materialstärke unterscheiden. Demnach kann mit einem Wechseln von über die Horizontalfördereinrichtung 10 zu transportierenden und nachfolgenden abzuführenden Getränkebehältnissen 6 zunächst ein starkes Abweichen der erwarteten Soll-Position SP von der tatsächlichen Ist-Position IP einhergehen. Um diesem Problem zu begegnen, kann das System 1 als lernfähiges System ausgebildet sein, bei welchem an die Steuerungseinheit S Angaben zu den jeweiligen über die Horizontalfördereinrichtung 10 zu transportierenden Getränkebehältnissen 6 übermittelt werden. Stellt die Steuerungseinheit S ein Abweichen, insbesondere ein sich häufig wiederholendes Abweichen, der zu erwartenden Soll-Position von der tatsächlichen Ist-Position IP von Getränkebehältnisse 6 fest, so kann sie die tatsächlichen Ist-Positionen IP speichern und die zu erwartenden jeweiligen Soll-Positionen an die erfassten tatsächlichen Ist-Positionen während des laufenden Betriebes anpassen. Sofern die jeweiligen Getränkebehältnisse 6 zu einem späteren Zeitpunkt erneut mittels der Horizontalförderung 10 transportiert und von der Horizontalfördereinrichtung 10 abgeführt werden sollen, kann die Steuerungseinheit S auf die gespeicherten Ist-Positionen bzw. auf frühere Erfahrungswerte zurückgreifen.

Aus längerem Betrieb des Systems 1 kann hierbei über die Steuerungseinheit S zunehmend genauer die tatsächliche Ist-Position IP der Getränkebehältnisse 6 vorhergesagt werden, so dass ein Anpassen einer Bewegungsfahrt der Greifköpfe 3a bis 3c nach bestimmtem Betrieb des Systems 1 nicht mehr oder nur mit geringerem Korrekturversatz notwendig wird.

Eine schematische Draufsicht auf eine Ausführungsform eines erfindungsgemäßen Systems 1 unter Verdeutlichung der Anpassung einer Bewegungsfahrt von mehreren Greifköpfen 3a bis 3c wird nun in den Figuren 2 gezeigt.

So sind in Figur 2A weiterhin die drei die sich im Rahmen ihrer Bewegungsfahrt in Förderrichtung FR der Getränkebehältnisse 6 bewegenden Greifköpfe 3a bis 3c zu erkennen, sowie der Anschlag 14, welcher ebenso in Förderrichtung FR geführt wird. Bei Figur 2A wurde die jeweilige Bewegungsfahrt der Greifköpfe 3a bis 3c noch nicht an die jeweilige erfasste Ist-Position IP von Getränkebehältnissen 6 angepasst.

Figur 2A zeigt zudem für jeden der Greifköpfe 3a bis 3c mehrere Aufnahmepositionen A, B, C und D. Die ersten Aufnahmepositionen A der Greifköpfe 3a, 3b und 3c, welche ersten Aufnahmepositionen A in Förderrichtung FR der Getränkebehältnisse 6 fluchten, sind vorgesehen zur Entgegennahme von Getränkebehältnissen 6 einer ersten der parallelen Reihen (vgl. Figur 3). Weiter sind die zweiten Aufnahmepositionen B vorgesehen zur Entgegennahme von Getränkebehältnissen 6 einer zweiten der parallelen Reihen, die dritten Aufnahmepositionen C zur Entgegennahme von Getränkebehältnissen 6 einer dritten Reihe sowie die vierten Aufnahmepositionen D zur Entgegennahme von Getränkebehältnissen 6 einer vierten Reihe. Jeder der Greifköpfe 3a bis 3c verfügt daher für jede der parallelen Reihen über jeweils mehrere Aufnahmepositionen A, B, C bzw. D. Die Aufnahmepositionen A, B, C und D werden hierbei jeweils über eine Greifeinrichtung für jeweils ein Getränkebehältnis 6 ausgebildet.

Im Ausführungsbeispiel der Figur 2A sind die Aufnahmepositionen A, B, C und D zumindest näherungsweise fest am jeweiligen Greifkopf 3a bis 3c vorgegeben. Eine relative Bewegung der ersten Aufnahmepositionen A zueinander sowie eine relative Bewegung der ersten, zweiten, dritten und/oder vierten Aufnahmepositionen A, B, C und D zueinander, ist in Figur 2A nicht möglich.

Weiter entspricht die gesamte Anzahl an ersten, zweiten, dritten und vierten Aufnahmepositionen A, B, C und D des ersten Greifkopfes 3a, des zweiten Greifkopfes 3b sowie des dritten Greifkopfes 3c jeweils einer Anzahl an für eine Verpackungseinheit vorgesehenen Getränkebehältnissen 6. Über eine Entgegennahme an Getränkebehältnissen 6 von der Horizontalfördereinrichtung 10 (vgl. Figur 1) und nachfolgendem Absetzen kann somit eine Verpackungseinheit über einen Greifkopf 3a, 3b, bzw. 3c vollständig mit Getränkebehältnissen 6 ausgestattet werden.

Bei der in Figur 2B gezeigten Ausführungsform wurde bereits die Ist-Position IP (vgl. Fig. 1) von Getränkebehältnissen 6 erfasst und die Bewegungsfahrt der Greifköpfe 3a bis 3c an die erfasste Ist-Position IP angepasst. Hierbei wurden gemäß Ausführungsbeispiel der Figur 2B die ersten, zweiten, dritten und vierten Aufnahmepositionen A, B, C und D der Greifköpfe 3a bis 3c jeweils relativ zueinander verstellt. Zu der relativen Verstellung der ersten, zweiten, dritten und vierten Aufnahmepositionen A, B, C und D kann ergänzend oder alternativ ein Korrekturversatz der Greifköpfe 3a bis 3c, wie bereits zu Ausführungsbeispiel der Figur 1 beschrieben, in Abhängigkeit der jeweils erfassten Ist-Position IP erfolgen.

In Figur 2B ist die Verstellung der ersten Aufnahmepositionen A der Greifköpfe 3a bis 3C, der zweiten Aufnahmepositionen B der Greifköpfe 3a bis 3c, der dritten Aufnahmepositionen C der Greifköpfe 3a bis 3c sowie der vierten Aufnahmepositionen D der Greifköpfe 3a bis 3C jeweils zeitsynchron und zumindest annäherungsweise in Echtzeit nach Ermitteln der jeweiligen Ist-Position durch die Detektionseinrichtung 17 (vgl. Fig. 3) erfolgt.

Wie bereits vorhergehend erwähnt, nimmt aufgrund der Forminstabilität der Getränkebehältnisse 6 eine Abweichung der tatsächlichen Ist-Position IP von Getränkebehältnissen 6 von einer zu erwartenden Soll-Position SP (vgl. Fig. 1) mit zunehmender Entfernung vom Anschlag 14 zu. Demnach wurden die Aufnahmepositionen A, B, C und D des Greifkopfes 3a, welcher die größte Entfernung zum Anschlag 14 besitzt, um einen größeren Betrag als die Aufnahmepositionen A, B, C und D des Greifkopfes 3b, welcher dem Greifkopfe 3a vorauseilt, verstellt. Weiterhin wurden die Aufnahmepositionen A, B, C und D des Greifkopfes 3c, welcher dem Greifkopf 3b vorauseilt, um einen kleineren Betrag als die Aufnahmepositionen A, B, C und D des Greifkopfes 3b verstellt. Die Verstellung sämtlicher der Aufnahmepositionen A, B, C und D erfolgt ggf. jeweils in oder gegen die Förderrichtung FR der Getränkebehältnisse 6 bzw. der PET-Flaschen 7.

In Figur 3 ist weiterhin die Führung der Getränkebehältnisse 6 bzw. der PET-Flaschen 7 in parallelen Reihen und in Förderrichtung FR zu erkennen. Die Greifköpfe 3a bis 3c aus den vorhergehenden Figuren 1 und 2 sind aus Gründen der Übersichtlichkeit nicht mit dargestellt.

Figur 3 zeigt mehrere der Horizontalfördereinrichtung 10 bzw. dem Endlosförderband 12 zugeordnete Gassenbleche 15, welche die Getränkebehältnisse 6 bzw. die PET-Flaschen 7 in parallelen Reihen führen. Hierzu sind die Gassenbleche 15 parallel zueinander orientiert. Dargestellt sind zudem zweite Seitenwände 16, welche die Führung der Getränkebehältnisse 6 entlang der Horizontalförderrichtung 10 und in Förderrichtung FR seitlich begrenzen. Wie in Figur 3 zu erkennen, ragt die vertikale Erstreckung der Gassenbelche 15 und der Seitenwände 16 nicht über einen Hals der als PET-Flaschen 7 ausgebildeten Getränkebehältnisse 6 hinaus, so dass die PET-Flaschen 7 von oben für die Greifköpfe 3a bis 3c (vgl. Fig. 1 und 2) zugänglich gehalten sind.

Weiter sind die Detektionseinrichtungen 17 dargestellt, auf welche vorherig bereits Bezug genommen wurde. Im Ausführungsbeispiel der Figur 3 sind zwei Detektionseinrichtungen 17 vorgesehen, die in Förderrichtung FR der Getränkebehältnisse 6 hintereinander im Bereich der Horizontalfördereinrichtung 10 angeordnet sind. Die Detektionseinrichtungen 17 sind jeweils ausgebildet als Lichtschranke 19 und besitzen jeweils einen Detektionsbereich DE, welcher sich senkrecht zur Förderrichtung FR der Getränkebehältnisse 6 erstreckt.

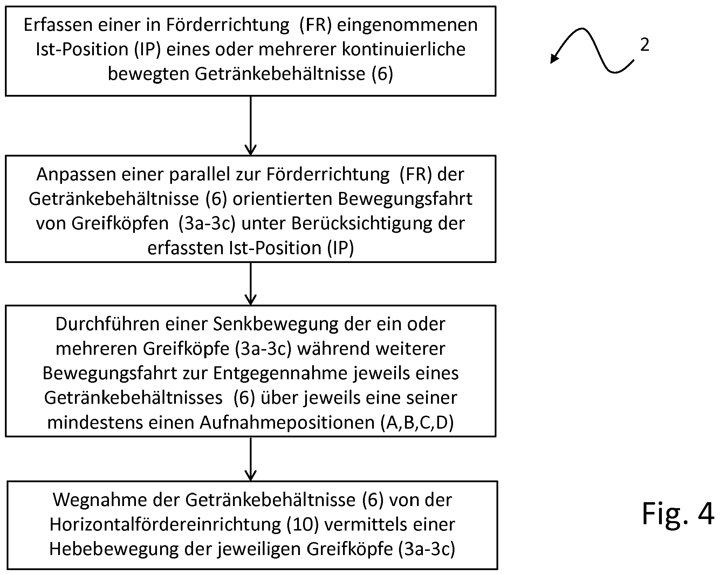

**Figur 4** zeigt wesentliche Schritte einer Ausführungsform eines erfindungsgemäßen Verfahrens 2.

So wird in einem ersten Schritt eine Ist-Position IP eines oder mehrerer kontinuierliche bewegter Getränkebehältnisse 6 erfasst. Weiter erfolgt in einem nachfolgenden Schritt ein Anpassen einer parallel zur Förderrichtung FR der Getränkebehältnisse 6 orientierten Bewegungsfahrt mehrerer Greifköpfe 3a bis 3c unter Berücksichtigung der erfassten Ist-Position IP. Nachdem die Bewegungsfahrt angepasst wurde, wird eine Senkbewegung der Greifköpfe 3a bis 3c bei weiterer Bewegungsfahrt und zur Entgegennahme der Getränkebehältnisse 6 über jeweils eine Aufnahmeposition A, B, C bzw. D durchgeführt.

Abschließend werden die Getränkebehältnisse 6 von der Horizontalfördereinrichtung 10 vermittels einer Hebebewegung der Greifköpfe 3a bis 3c weggenommen.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: System
- 2: Verfahren
- 3a-3c: Greifköpfe
- 6: Getränkebehältnisse
- 7: PET-Flaschen; PET- Behälter
- 10: Horizontalfördereinrichtung
- 12: Endlosförderband
- 14: Anschlag
- 15: Gassenbleche
- 16: Seitenwand
- 17: Detektionseinrichtung
- 19: Lichtschranke

- A: Erste Aufnahmepositionen
- B: Zweite Aufnahmepositionen
- C: Dritte Aufnahmepositionen
- D: Vierte Aufnahmepositionen
- DE: Detektionsbereich
- IP: Ist-Position
- S: Steuerungseinheit
- SP: Soll-Position
- FR: Förderrichtung

## Patentansprüche

1. Verfahren (2) zum Abführen von auf einer Horizontalfördereinrichtung (10) kontinuierlich bewegten und in parallelen Reihen geführten Getränkebehältnissen (6) über einen Greifkopf (3a, 3b, 3c) oder mehrere Greifköpfe (3a, 3b, 3c), welchem Greifkopf (3a, 3b, 3c) oder welche mehrere Greifköpfen (3a, 3b, 3c) jeweils mindestens eine Aufnahmeposition (A, B, C, D) für die abzuführenden Getränkebehältnisse (6) ausbilden und welche Getränkebehältnisse (6) auf der Horizontalfördereinrichtung (10) zumindest näherungsweise geschlossen geführt werden, das Verfahren (2) beinhaltend folgende Schritte:
- Erfassen einer in Förderrichtung (FR) eingenommenen Ist-Position (IP) eines oder mehrerer der kontinuierlich bewegten Getränkebehältnisse (6);
- Anpassen einer parallel zur Förderrichtung (FR) der Getränkebehältnisse (6) orientierten Bewegungsfahrt des Greifkopfes (3a, 3b, 3c) oder der mehreren Greifköpfe (3a, 3b, 3c) unter Berücksichtigung der erfassten Ist-Position (IP);
**gekennzeichnet durch** die Schritte:
- Verzögern der kontinuierlichen Bewegung der Getränkebehältnisse (6) **durch** wenigstens einen fahrenden und quer zur Förderrichtung (FR) orientierten Anschlag (14) und Berücksichtigung einer Geschwindigkeit des Anschlags (14) bei Anpassung der Bewegungsfahrt des Greifkopfes (3a, 3b, 3c) oder der mehreren Greifköpfe (3a, 3b, 3c);
- Durchführen einer Senkbewegung des Greifkopfes (3a, 3b, 3c) oder der mehreren Greifköpfe (3a, 3b, 3c) während weiterer Bewegungsfahrt zur Entgegennahme jeweils eines Getränkebehältnisses (6) über jeweils eine seiner mindestens einen Aufnahmepositionen (A, B, C, D); Wegnahme der Getränkebehältnisse (6) von der Horizontalfördereinrichtung (10) vermittels einer Hebebewegung des Greifkopfes (3a, 3b, 3c) oder der jeweiligen mehreren Greifköpfe (3a, 3b, 3c).

2. Verfahren nach Anspruch 1, bei welchem der Greifkopf (3a, 3b, 3c) oder die mehreren Greifköpfe (3a, 3b, 3c) für jede Reihe der kontinuierlich geführten Getränkebehältnisse (6) jeweils mindestens eine, vorzugsweise jedoch mehr als eine Aufnahmeposition (A, B, C, D) besitzen.

3. Verfahren nach Anspruch 2, bei welchem der Greifkopf (3a, 3b, 3c) oder die mehreren Greifköpfe (3a, 3b, 3c) während der weiteren Bewegungsfahrt und während der Wegnahme der Getränkebehältnisse (6) vermittels ihrer Hebebewegung durchgehend geschwindigkeitssynchron zu den Getränkebehältnissen (6) und parallel zu ihrer Förderrichtung (FR) bewegt werden.

4. Verfahren nach einem oder mehreren der Ansprüche 1 bis 3, umfassend mindestens zwei in Förderrichtung (FR) hintereinander fahrende Greifköpfe (3a, 3b, 3c), die während ihrer Bewegungsfahrt unmittelbar vor deren jeweiliger Anpassung geschwindigkeitssynchron zu den Getränkebehältnissen (6) bewegt werden, wobei eine Anpassung ihrer Bewegungsfahrten durch einen jeweiligen Korrekturversatz in oder gegen die Förderrichtung (FR) der Getränkebehältnisse (6) mit direkt nachfolgender Wiederaufnahme ihrer geschwindigkeitssynchronen Bewegungsfahrt erfolgt.

5. Verfahren nach Anspruch 4, bei welchem ein erster Korrekturversatz eines ersten in Förderrichtung (FR) vorauseilenden der mindestens zwei Greifköpfe (3a, 3b, 3c) um einen ersten Betrag durchgeführt wird und ein zweiter Korrekturversatz eines zweiten in Förderrichtung (FR) nacheilenden der mindestens zwei Greifköpfe (3a, 3b, 3c) um einen zweiten Betrag durchgeführt wird, wobei der zweite Betrag gegenüber dem ersten Betrag vergrößert ausgebildet ist.

6. Verfahren nach einem oder mehreren der voranstehenden Ansprüche 1 bis 5, bei welchem mindestens zwei Greifköpfe (3a, 3b, 3c) eine Senkbewegung zur Entgegennahme der Getränkebehältnisse (6) von der Horizontalfördereinrichtung (10) und/oder eine Wegnahme der Getränkebehältnisse (6) von der Horizontalfördereinrichtung (10) synchron durchführen.

7. Verfahren nach einem oder mehreren der Ansprüche 1 bis 6, bei welchem die Ist-Position (IP) des kontinuierlich bewegten Getränkebehältnisses (6) oder der mehreren kontinuierlich bewegten Getränkebehältnisse (6) durch eine Lichtschranke (19) oder durch mehrere Lichtschranken (19) mit senkrecht zur Förderrichtung (FR) der Getränkebehältnisse orientiertem Detektionsbereich (DE) erfasst wird.

8. Verfahren nach einem oder mehreren der Ansprüche 1 bis 7, bei welchem der wenigstens eine Greifkopf (3a, 3b, 3c) oder wenigstens einer der Greifköpfe (3a, 3b, 3c) erste Aufnahmepositionen (A) für Getränkebehältnisse (6) einer ersten der parallel geführten Reihen besitzt und zweite Aufnahmepositionen (B) für Getränkebehältnisse einer zweiten der parallel geführten Reihen besitzt, wobei in Abhängigkeit der erfassten Ist-Position (IP) von Getränkebehältnissen (6) die ersten Aufnahmepositionen (A) relativ zu den zweiten Aufnahmepositionen (B) in oder gegen die Förderrichtung (FR) der Getränkebehältnisse (6) verstellt werden.

9. Verfahren nach Anspruch 8, bei welchem mindestens zwei Greifköpfe (3a, 3b, 3c) mit jeweils relativ zueinander in oder gegen die Förderrichtung (FR) verstellbaren ersten und zweiten Aufnahmepositionen (A, B) vorhanden sind, wobei eine Verstellung der ersten und zweiten Aufnahmepositionen (A, B) eines ersten der mindestens zwei Greifköpfe (3a, 3b, 3c) unter Berücksichtigung einer Verstellung der ersten und zweiten Aufnahmepositionen (A, B) eines zweiten der mindestens zwei Greifköpfe (3a, 3b, 3c) erfolgt.

10. System (1) zum Abführen von Getränkebehältnissen (6), welche im geordneten und zumindest näherungsweise geschlossenen Massenstrom mittels einer Horizontalfördereinrichtung (10) in parallelen Reihen kontinuierlich bewegbar sind, umfassend einen Greifkopf (3a, 3b, 3c) oder mehrere Greifköpfe (3a, 3b, 3c), wenigstens eine Detektionseinrichtung (17) zum Erfassen einer Ist-Position (IP) von Getränkebehältnissen (6) in Förderrichtung sowie eine Steuerungseinheit (S), die derart mit der Detektionseinrichtung (17) und dem Greifkopf (3a, 3b, 3c) oder den mehreren Greifköpfen (3a, 3b, 3c) in Wirkverbindung gebracht ist, dass via die Steuerungseinheit (S) eine parallel zur Förderrichtung (FR) der Getränkebehältnisse (6) orientierte Bewegungsfahrt des Greifkopfes (3a, 3b, 3c) oder der mehreren Greifköpfe (3a, 3b, 3c) unter Berücksichtigung der erfassten Ist-Position (IP) anpassbar ist, wobei der Greifkopf (3a, 3b, 3c) oder die mehreren Greifköpfe (3a, 3b, 3c) jeweils eine Aufnahmeposition (A, B, C, D) oder mehrere Aufnahmepositionen (A, B, C, D) besitzen, die zur Entgegennahme der Getränkebehältnisse (6) über eine Senkbewegung des Greifkopfes (3a, 3b, 3c) oder der mehreren Greifköpfe (3a, 3b, 3c) mit nachfolgender Wegnahme der Getränkebehältnisse (6) von der Horizontalfördereinrichtung (10) zeitlich nach Anpassung der Bewegungsfahrt ausgebildet sind, **dadurch gekennzeichnet, dass** ein fahrender und quer zur Förderrichtung (FR) der Getränkebehältnisse (6) orientierter Anschlag (14) zur Verzögerung der Getränkebehältnisse (6) mit der Steuerungseinheit (S) in Wirkverbindung gebracht ist, so dass über die Steuerungseinheit (S) unter Berücksichtigung einer Geschwindigkeit des Anschlags (14) eine Anpassung der Bewegungsfahrt des mindestens einen Greifkopfes (3a, 3b, 3c) oder der mehreren Greifköpfe (3a, 3b, 3c) durchführbar ist.

11. System nach Anspruch 10, bei welchem die Detektionseinrichtung (17) wenigstens eine, vorzugsweise jedoch mehrere entlang einer Förderstrecke der Getränkebehältnisse (6) angeordnete Lichtschranken (19) umfasst, wobei der Detektionsbereich (DE) der wenigstens einen Lichtschranke (19) sich senkrecht zur Förderrichtung (FR) der Getränkebehältnisse (6) erstreckt.

12. System nach Anspruch 10 oder Anspruch 11, umfassend mindestens zwei in Förderrichtung (FR) hintereinander fahrbare Greifköpfe (3a, 3b, 3c), die während ihrer Bewegungsfahrt unmittelbar vor deren jeweiliger Anpassung geschwindigkeitssynchron zu den Getränkebehältnissen (6) bewegbar sind, wobei via die Steuerungseinheit (S) eine Anpassung ihrer Bewegungsfahren durch einen jeweiligen Korrekturversatz in oder gegen die Förderrichtung (FR) der Getränkebehältnisse (6) mit direkt nachfolgender Wiederaufnahme ihrer geschwindigkeitssynchronen Bewegungsfahrt vorgebbar ist.

13. System nach einem oder mehreren der Ansprüche 10 bis 12, wobei der Greifkopf (3a, 3b, 3c) oder die mehreren Greifköpfe (3a, 3b, 3c) für jede parallele Reihe der kontinuierlich bewegten Getränkebehältnisse (6) jeweils mindestens eine, vorzugsweise jedoch jeweils mehrere Aufnahmepositionen (A, B, C, D) ausbilden, wobei erste Aufnahmepositionen (A) für die erste Reihe in oder gegen die Förderrichtung (FR) der Getränkebehältnisse (6) relativ zu zweiten Aufnahmepositionen (B) für die zweite Reihe in Abhängigkeit der über die Detektionseinrichtung (17) erfassten Ist-Position (IP) von Getränkebehältnissen (6) verstellbar sind.

14. System nach Anspruch 10 und 13, bei welchem mindestens ein erster Greifkopf (3a) erste und zweite relativ zueinander verstellbare Aufnahmepositionen (A, B) für die erste und zweite Reihe ausbildet und ebenso mindestens ein zweiter Greifkopf (3b) erste und zweite relativ zueinander verstellbare Aufnahmepositionen (A, B) für die erste und zweite Reihe ausbildet, wobei über die Steuerungseinheit (S) eine Verstellung der ersten und zweiten Aufnahmepositionen (A, B) des ersten Greifkopfes (3a) in Abhängigkeit einer Verstellung der ersten und zweiten Aufnahmeposition (A, B) des zweiten Greifkopfes (3b) vorgebbar ist.

## Claims

1. Method (2) for discharging beverage containers (6) continuously moved on a horizontal conveyor (10) and guided in parallel rows, by one gripping head (3a, 3b, 3c) or by more gripping heads (3a, 3b, 3c), said one gripping head (3a, 3b, 3c) or more gripping heads (3a, 3b, 3c) respectively forming at least one pick-up position (A, B, C, D) for the beverage containers (6) to be discharged and said beverage containers (6) being guided on the horizontal conveyor (10) at least approximately together, the method (2) comprising the following steps:
- acquiring an actual position (IP) adopted in the conveying direction (FR) by one or more of the continuously moved beverage containers (6);
- adapting of a travelling movement of the one or more gripping heads (3a, 3b, 3c), the travelling movement being oriented in parallel to the conveying direction (FR) of the beverage containers (6), whilst taking into account the acquired actual position (IP);
**characterized by** the steps:
- decelerating the continuous movement of the beverage containers (6) by at least one travelling stop (14) oriented transversely to the conveying direction (FR), and a speed of the stop (14) is taken into account when adapting the travelling movement of the one or more gripping heads (3a, 3b, 3c);
- performing a lowering motion of the one gripping head (3a, 3b, 3c) or of the more gripping heads (3a, 3b, 3c) during further travelling movement for accepting respectively one beverage container (6) via respectively one of its at least one pick-up positions (A, B, C, D); removing the beverage containers (6) from the horizontal conveyor (10) by means of a lifting motion of the respective one gripping head (3a, 3b, 3c) or more gripping heads (3a, 3b, 3c).

2. Method according to claim 1, wherein for each row of the continuously guided beverage containers (6), the one gripping head (3a, 3b, 3c) or more gripping heads (3a, 3b, 3c) respectively have at least one, but preferably more than one pick-up position (A, B, C, D).

3. Method according to claim 2, wherein during the further travelling movement and during the removal of the beverage containers (6) by means of the lifting motion thereof, the one gripping head (3a, 3b, 3c) or more gripping heads (3a, 3b, 3c) are continuously moved in speed synchronism with the beverage containers (6) and in parallel to the conveying direction (FR) thereof.

4. Method according to one or more of claims 1 to 3, comprising at least two gripping heads (3a, 3b, 3c) travelling consecutively in the conveying direction (FR), which are moved, during the travelling movement thereof, immediately before said travelling movement being respectively adapted, in speed synchronism with the beverage containers (6), wherein the adaptation of the travelling movements thereof is done by a respective corrective offset in or against the conveying direction (FR) of the beverage containers (6) with immediately subsequent resumption of the speed-synchronous travelling movement.

5. Method according to claim 4, wherein a first corrective offset of a first of the at least two gripping heads (3a, 3b, 3c) leading in the conveying direction (FR) is performed by a first amount and a second corrective offset of a second of the at least two gripping heads (3a, 3b, 3c) trailing in the conveying direction (FR) is performed by a second amount, wherein the second amount is configured larger than the first amount.

6. Method according to one or more of the previous claims 1 to 5, wherein at least two gripping heads (3a, 3b, 3c) synchronously perform a lowering motion for accepting the beverage containers (6) from the horizontal conveyor (10) and/or removal of the beverage containers (6) from the horizontal conveyor (10).

7. Method according to one or more of claims 1 to 6, wherein the actual position (IP) of the one or more continuously moved beverage containers (6) is acquired by one photoelectric sensors (19) or by more photoelectric sensors (19) with a detection area (DE) oriented vertically to the conveying direction (FR) of the beverage containers.

8. Method according to one or more of claims 1 to 7, wherein the at least one gripping head (3a, 3b, 3c) or at least one of the gripping heads (3a, 3b, 3c) has first pick-up positions (A) for beverage containers (6) of a first one of the rows guided in parallel and second pick-up positions (B) for beverage containers of a second one of the rows guided in parallel, wherein depending on the acquired actual position (IP) of the beverage containers (6) the first pick-up positions (A) are adjusted in relation to the second pick-up positions (B) in or against the conveying direction (FR) of the beverage containers (6).

9. Method according to claim 8, wherein at least two gripping heads (3a, 3b, 3c) are present with first and second pick-up positions (A, B) respectively adjustable in relation to each other in or against the conveying direction (FR), wherein an adjustment of the first and second pick-up positions (A, B) of a first one of the at least two gripping heads (3a, 3b, 3c) is performed taking into account an adjustment of the first and second pick-up positions (A, B) of a second one of the at least two gripping heads (3a, 3b, 3c).

10. System (1) for discharging beverage containers (6), which can be moved continuously in parallel rows in an ordered and at least approximately closed mass flow by means of a horizontal conveyor (10), comprising one gripping head (3a, 3b, 3c) or more gripping heads (3a, 3b, 3c), at least one detection device (17) for acquiring an actual position (IP) of the beverage containers (6) in the conveying direction, and a control unit (S) which is brought into operative connection with the detection device (17) and the one gripping head (3a, 3b, 3c) or more gripping heads (3a, 3b, 3c) such that the control unit (S) can adjust a travelling movement of the one gripping head (3a, 3b, 3c) or more gripping heads (3a, 3b, 3c), the travelling movement being oriented in parallel to the conveying direction (FR) of the beverage containers (6), whilst taking into account the acquired actual position (IP), wherein the one gripping head (3a, 3b, 3c) or more gripping heads (3a, 3b, 3c) respectively have one pick-up position (A, B, C, D) or more pick-up positions (A, B, C, D) which are configured for accepting the beverage containers (6) via a lowering motion of the one gripping head (3a, 3b, 3c) or more gripping heads (3a, 3b, 3c) with subsequent removal of the beverage containers (6) from the horizontal conveyor (10) chronologically after adaptation of the travelling movement, **characterized in that** a travelling stop (14) oriented transversely to the conveying direction (FR) of the beverage containers (6) for deceleration of the beverage containers (6), said stop (14) being brought into operative connection with the control unit (S) so that the control unit (S) can perform an adaptation of the travelling movement of the at least one gripping head (3a, 3b, 3c) or the several gripping heads (3a, 3b, 3c) whilst taking into account a speed of the stop (14).

11. System according to claim 10, wherein the detection device (17) comprises at least one, but preferably several photoelectric sensors (19) arranged along a conveyor line of the beverage containers (6), wherein the detection range (DE) of the at least one photoelectric sensor (19) extends vertically to the conveying direction (FR) of the beverage containers (6).

12. System according to claim 10 or claim 11, comprising at least two gripping heads (3a, 3b, 3c) able to consecutively travel in the conveying direction (FR), which, during the travelling movement thereof, immediately before the respective adaptation thereof, are movable in speed synchronism with the beverage containers (6), wherein the control unit (S) can specify an adaptation of the travelling movements thereof by a respective corrective offset in or against the conveying direction (FR) of the beverage containers (6) with immediately subsequent resumption of the speed-synchronous travelling movement thereof.

13. System according to one or more of claims 10 to 12, wherein the one or more gripping heads (3a, 3b, 3c), for each parallel row of the continuously moved beverage containers (6), respectively have at least one, but preferably several pick-up positions (A, B, C, D) respectively, wherein first pick-up positions (A) for the first row in or against the conveying direction (FR) of the beverage containers (6) are adjustable in relation to second pick-up positions (B) for the second row depending on the actual position (IP) of beverage containers (6) acquired by the detection device (17).

14. System according to claim 10 and 13, wherein at least one first gripping head (3a) forms first and second pick-up positions (A, B) adjustable in relation to each other for the first and second rows, and likewise at least one second gripping head (3b) forms first and second pick-up positions (A, B) adjustable in relation to each other for the first and second rows, wherein the control unit (S) can specify an adjustment of the first and second pick-up positions (A, B) of the first gripping head (3a) depending on an adjustment of the first and second pick-up positions (A, B) of the second gripping head (3b).

## Revendications

1. Procédé (2) d'évacuation, par l'intermédiaire d'une tête de préhension (3a, 3b, 3c) ou d'une pluralité de têtes de préhension (3a, 3b, 3c), de récipients à boissons (6) déplacés en continu sur un dispositif de transport horizontal (10) et guidés en rangées parallèles, laquelle tête de préhension (3a, 3b, 3c) ou laquelle pluralité de têtes de préhension (3a, 3b, 3c) forment chacune au moins une position de réception (A, B, C, D) pour les récipients à boissons (6) à évacuer, et lesquels récipients à boissons (6) sont guidés d'une manière au moins approximativement fermée sur le dispositif de transport horizontal (10), ledit procédé (2) comprenant les étapes suivantes consistant à:
- détecter une position réelle (IP) occupée dans la direction de transport (FR), d'un ou de plusieurs des récipients à boissons (6) déplacés en continu;
- adapter, en tenant compte de la position réelle (IP) détectée, une course de déplacement de la tête de préhension (3a, 3b, 3c) ou de la pluralité de têtes de préhension (3a, 3b, 3c), qui est orientée parallèlement à la direction de transport (FR) des récipients à boissons (6);
**caractérisé par** les étapes consistant à:
- ralentir le mouvement continu des récipients à boissons (6) par au moins une butée (14) mobile et orientée transversalement à la direction de transport (FR), et à prendre en considération une vitesse de la butée (14) lorsque la course de déplacement de la tête de préhension (3a, 3b, 3c) ou de la pluralité de têtes de préhension (3a, 3b, 3c) est adaptée;
- effectuer un mouvement d'abaissement de la tête de préhension (3a, 3b, 3c) ou de la pluralité de têtes de préhension (3a, 3b, 3c) durant la continuation de la course de déplacement pour recevoir respectivement un récipient à boissons (6) par respectivement l'une de sa dite au moins une position de réception (A, B, C, D); à enlever les récipients à boissons (6) du dispositif de transport horizontal (10) au moyen d'un mouvement de levage de la tête de préhension (3a, 3b, 3c) ou des plusieurs têtes de préhension (3a, 3b, 3c) respectives.

2. Procédé selon la revendication 1, dans lequel la tête de préhension (3a, 3b, 3c) ou la pluralité de têtes de préhension (3a, 3b, 3c) possède(nt) chacune au moins une, mais de préférence plus d'une position de réception (A, B, C, D) pour chaque rangée des récipients à boissons (6) guidés en continu.

3. Procédé selon la revendication 2, dans lequel, durant la continuation de la course de déplacement et pendant que les récipients à boissons (6) sont enlevés au moyen de leur mouvement de levage, la tête de préhension (3a, 3b, 3c) ou les plusieurs têtes de préhension (3a, 3b, 3c) sont déplacées continûment de manière à être synchrones en vitesse par rapport aux récipients à boissons (6) et parallèlement à leur direction de transport (FR).

4. Procédé selon l'une ou plusieurs des revendications 1 à 3, comprenant au moins deux têtes de préhension (3a, 3b, 3c) se déplaçant l'une derrière l'autre dans la direction de transport (FR) et qui, durant leur course de déplacement, immédiatement avant son adaptation respective, sont déplacées de manière à être synchrones en vitesse par rapport aux récipients à boissons (6), dans lequel une adaptation de leurs courses de déplacement est réalisée par un décalage de correction respectif dans ou à l'encontre de la direction de transport (FR) des récipients à boissons (6), avec une reprise directement subséquente de leur course de déplacement synchrone en vitesse.

5. Procédé selon la revendication 4, dans lequel un premier décalage de correction d'une première desdites au moins deux têtes de préhension (3a, 3b, 3c), qui est en avance dans la direction de transport (FR), est réalisé d'une première valeur, et un deuxième décalage de correction d'une deuxième desdites au moins deux têtes de préhension (3a, 3b, 3c), qui vient après dans la direction de transport (FR), est réalisé d'une deuxième valeur, la deuxième valeur étant agrandie par rapport à la première valeur.

6. Procédé selon l'une ou plusieurs des revendications précédentes 1 à 5, dans lequel au moins deux têtes de préhension (3a, 3b, 3c) effectuent en synchronisme un mouvement d'abaissement pour recevoir les récipients à boissons (6) en provenance du dispositif de transport horizontal (10) et/ou un enlèvement des récipients à boissons (6) dudit dispositif de transport horizontal (10).

7. Procédé selon l'une ou plusieurs des revendications 1 à 6, dans lequel la position réelle (IP) du récipient à boissons (6) déplacé en continu ou de la pluralité de récipients à boissons (6) déplacés en continu est détectée au moyen d'un barrage photoélectrique (19) ou au moyen d'une pluralité de barrages photoélectriques (19) ayant une zone de détection (DE) orientée perpendiculairement à la direction de transport (FR) des récipients à boissons.

8. Procédé selon l'une ou plusieurs des revendications 1 à 7, dans lequel ladite au moins une tête de préhension (3a, 3b, 3c) ou l'une au moins des têtes de préhension (3a, 3b, 3c) possède de premières positions de réception (A) pour des récipients à boissons (6) d'une première des rangées guidées parallèlement ainsi que de deuxièmes positions de réception (B) pour des récipients à boissons (6) d'une deuxième des rangées guidées parallèlement, dans lequel les premières positions de réception (A) sont réglées par rapport aux deuxièmes positions de réception (B) dans ou à l'encontre de la direction de transport (FR) des récipients à boissons (6) en fonction de la position réelle (IP) détectée de récipients à boissons (6).

9. Procédé selon la revendication 8, dans lequel il y a au moins deux têtes de préhension (3a, 3b, 3c) ayant chacune de premières et deuxièmes positions de réception (A, B) réglables les unes par rapport aux autres dans ou à l'encontre de la direction de transport (FR), dans lequel un réglage des premières et deuxièmes positions de réception (A, B) d'une première desdites au moins deux têtes de préhension (3a, 3b, 3c) se fait en tenant compte d'un réglage des premières et deuxièmes positions de réception (A, B) d'une deuxième desdites au moins deux têtes de préhension (3a, 3b, 3c).

10. Système (1) d'évacuation de récipients à boissons (6) qui sont déplaçables en continu en rangées parallèles, dans un flux de masse ordonné et au moins approximativement fermé, par l'intermédiaire d'un dispositif de transport horizontal (10), comprenant une tête de préhension (3a, 3b, 3c) ou une pluralité de têtes de préhension (3a, 3b, 3c), au moins un dispositif de détection (17) destiné à détecter une position réelle (IP) de récipients à boissons (6) dans la direction de transport ainsi qu'une unité de commande (S) qui est mise en communication active avec le dispositif de détection (17) et la tête de préhension (3a, 3b, 3c) ou les plusieurs têtes de préhension (3a, 3b, 3c) de telle sorte que, via ladite unité de commande (S), une course de déplacement de la tête de préhension (3a, 3b, 3c) ou de la pluralité de têtes de préhension (3a, 3b, 3c), qui est orientée parallèlement à la direction de transport (FR) des récipients à boissons (6), peut être adaptée en tenant compte de la position réelle (IP) détectée, dans lequel la tête de préhension (3a, 3b, 3c) ou les plusieurs têtes de préhension (3a, 3b, 3c) possèdent chacune une position de réception (A, B, C, D) ou plusieurs positions de réception (A, B, C, D) qui sont réalisées pour recevoir les récipients à boissons (6) par un mouvement d'abaissement de la tête de préhension (3a, 3b, 3c) ou des plusieurs têtes de préhension (3a, 3b, 3c), et, ci-après, enlever les récipients à boissons (6) dudit dispositif de transport horizontal (10), dans le temps après l'adaptation de la course de déplacement,
**caractérisé par le fait qu'**une butée (14) mobile et orientée transversalement à la direction de transport (FR) des récipients à boissons (6) et destiné à ralentir les récipients à boissons (6) est mise en communication active avec ladite unité de commande (S) de telle sorte qu'une adaptation de la course de déplacement de ladite au moins une tête de préhension (3a, 3b, 3c) ou de ladite pluralité de têtes de préhension (3a, 3b, 3c) peut être réalisée par l'unité de commande (S) en tenant compte d'une vitesse de ladite butée (14).

11. Système selon la revendication 10, dans lequel le dispositif de détection (17) comprend au moins un, mais de préférence plusieurs barrages photoélectriques (19) disposés le long d'un trajet de transport des récipients à boissons (6), dans lequel la zone de détection (DE) dudit au moins un barrage photoélectrique (19) s'étend perpendiculairement à la direction de transport (FR) des récipients à boissons (6).

12. Système selon la revendication 10 ou la revendication 11, comprenant au mois deux têtes de préhension (3a, 3b, 3c) qui sont déplaçables l'une derrière l'autre dans la direction de transport (FR) et qui, durant leur course de déplacement, immédiatement avant son adaptation respective, peuvent être déplacées de manière à être synchrones en vitesse par rapport aux récipients à boissons (6), dans lequel une adaptation de leurs courses de déplacement peut être prédéterminée, via ladite unité de commande (S), par un décalage de correction respectif dans ou à l'encontre de la direction de transport (FR) des récipients à boissons (6), avec une reprise directement subséquente de leur course de déplacement synchrone en vitesse.

13. Système selon l'une ou plusieurs des revendications 10 à 12, dans lequel la tête de préhension (3a, 3b, 3c) ou les plusieurs têtes de préhension (3a, 3b, 3c) forment chacune au moins une, mais de préférence chacune plusieurs positions de réception (A, B, C, D) pour chaque rangée parallèle des récipients à boissons (6) déplacés en continu, dans lequel de premières positions de réception (A) pour la première rangée sont réglables, dans ou à l'encontre de la direction de transport (FR) des récipients à boissons (6), par rapport à de deuxièmes positions de réception (B) pour la deuxième rangée en fonction de la position réelle (IP) de récipients à boissons (6) détectée par ledit dispositif de détection (17).

14. Système selon la revendication 10 et 13, dans lequel au moins une première tête de préhension (3a) forme de premières et deuxièmes positions de réception (A, B) réglables les unes par rapport aux autres, pour les première et deuxième rangées, et, de même, au moins une deuxième tête de préhension (3b) forme de premières et deuxièmes positions de réception (A, B) réglables les unes par rapport aux autres, pour les première et deuxième rangées, dans lequel un réglage des premières et deuxièmes positions de réception (A, B) de la première tête de préhension (3a) peut être prédéterminé par ladite unité de commande (S) en fonction d'un réglage des première et deuxième positions de réception (A, B) de la deuxième tête de préhension (3b).
